(19) Europäisches Patentamt

European Patent Office

Office européen des brevets

(11) **EP 1 487 139 A1**

(12) **EUROPÄISCHE PATENTANMELDUNG**

(43) Veröffentlichungstag:
**15.12.2004 Patentblatt 2004/51**

(51) Int Cl.[7]: **H04B 17/00**

(21) Anmeldenummer: **04450125.2**

(22) Anmeldetag: **09.06.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **11.06.2003 AT 9042003**

(71) Anmelder: **ARC Seibersdorf research GmbH**
**1010 Wien (AT)**

(72) Erfinder:
 • **Humer, Gerhard, Dipl.-Ing.**
 **1170 Wien (AT)**

 • **Kloibhofer, Reinhard, Dipl.-Ing.**
 **1040 Wien (AT)**
 • **Meyenburg, Michael, Dipl.-Ing.**
 **1120 Wien (AT)**
 • **Steinböck, Gerhard, Dipl.-Ing. (FH)**
 **1200 Wien (AT)**

(74) Vertreter: **Wildhack, Helmut, Dipl.-Ing. Dr. et al**
**Patentanwälte**
**Dipl.-Ing. Dr. Helmut Wildhack**
**Dipl.-Ing. Dr.Gerhard Jellinek**
**Landstrasser Hauptstrasse 50**
**1030 Wien (AT)**

(54) **Kanalsimulator**

(57) Ein Kanalsimulator zur Simulation zumindest eines Funk-Übertragungskanals umfasst Kanalsimulator-Eingangsmittel zum Empfang von Sendesignalen repräsentierenden Eingangssignalen, wobei die Eingangssignale eines oder mehrere aus digitalen oder analogen Hochfrequenzsignalen, digitalen oder analogen Basisband- oder Zwischenfrequenzbandsignalen, Audio- und/oder Videosignalen umfassen, Steuerungsmittel zur Bereitstellung zumindest eines durch Kanalparameter definierten Kanalmodells zur Beschreibung von Signalformungseigenschaften des zumindest einen Übertragungskanals, Signalverarbeitungsmittel zur Erzeugung zumindest eines Ausgangssignals durch Formung des Eingangssignals gemäß den Signalformungseigenschaften des Kanalmodells, Ausgabemittel zur Ausgabe des zumindest einen Ausgangssignals, wobei die Signalverarbeitungsmittel (FPGA, DSP) zur mathematischen Abbildung des Kanalmodells als geometrisches Modell mit einer Vielzahl von Streuobjekten und zur Formung des Ausgangssignals durch Echtzeit-Berechnung des Ausbreitungsverlaufs von Mehrwegkomponenten des Eingangssignals ausgebildet sind, welche Mehrwegkomponenten durch Streuung, Reflexion und Beugung des Eingangssignals an den Streuobiekten des geometrischen Modells heryorgerufen werden.

Fig. 4

**EP 1 487 139 A1**

**Beschreibung**

Die Erfindung betrifft einen Kanalsimulator zur Simulation zumindest eines Übertragungskanals zwischen Sendesignale ausstrahlenden Sendern und Empfängern eines digitalen oder analogen Funkübertragungssystems gemäß dem Oberbegriff des Anspruchs 1.

Die Erfindung betrifft weiters ein Verfahren zur Simulation zumindest eines Übertragungskanals zwischen Sendesignale ausstrahlenden Sendern und Empfängern eines digitalen oder analogen Funkübertragungssystems gemäß dem Oberbegriff des Anspruchs 26.

Digitale Mobilfunksysteme (GSM, UMTS ...) spielen in der heutigen Zeit der drahtlosen Kommunikation eine immer wichtigere Rolle. Zur effizienteren Nutzung des Übertragungskanals, das ist der Bereich zwischen Sende- und Empfangsantennen, und um höhere Datenraten zu erzielen, arbeitet die Forschung ständig an der Verbesserung solcher Systeme. Für die Evaluation der Funksysteme sind umfangreiche Tests unter realen Bedingungen notwendig, welche sehr aufwändig und dennoch nur bedingt aussagekräftig sind, weil sie nur für eine sehr begrenzte Anzahl von Umgebungsszenarien durchgeführt werden können und schlecht reproduzierbar sind. Daher geht man immer mehr dazu über, das Verhalten der Übertragung und den Einfluss des Übertragungskanals zu simulieren, wozu spezielle Kanalsimulatoren verwendet werden. Diese günstige und reproduzierbare Nachbildung im Labor erspart viele der ansonsten sehr zeit- und kostenaufwändigen Messungen in der Natur. Derzeit erhältliche Kanalsimulatoren weisen allerdings den Nachteil auf, dass sie das Ausbreitungsverhalten des Funksendesignals nicht exakt nachstellen, sondern die Simulation bloß durch Filterung des Signals mit einem Filter, dessen Eigenschaften je nach den gewählten Übertragungsszenarien gewählt wurden, durchführen. Simulationen nach diesem Verfahren sind nicht sehr genau und können nicht vollständig in Echtzeit durchgeführt werden, weil die Umgebungsszenarien nicht während der Simulation (in Echtzeit) geändert werden können.

Die vorliegende Erfindung bietet eine Lösung für die geschilderten Unzulänglichkeiten der derzeit bekannten Kanalsimulatoren durch Bereitstellen eines Kanalsimulators mit den kennzeichnenden Merkmalen des Anspruchs 1 sowie eines Kanalsimulationsverfahrens mit den kennzeichnenden Merkmalen des Anspruchs 26. Vorteilhafte Ausgestaltungen der Erfindung sind in den abhängigen Ansprüchen dargelegt.

Der erfindungsgemäße Kanalsimulator und das erfindungsgemäße Kanalsimulationsverfahren ermöglichen eine möglichst exakte Berechnung der Ausbreitungsphänomene von Funksendesignalen, eine vollständige Echtzeitsimulation dieser Signale mit Echtzeit-Variation der Kanalparameter des Kanalmodells und das Analysieren von einzelnen Datenframes während der Simulation, z.B. zur Ermittlung der Kanal-Impulsantwort.

Dem gegen über ist aus der US 5 973 638 ein Verfahren und eine Vorrichtung zur Verifizierung der Integrität eines intelligenten Antennensystems bekannt, bei dem ein Kanalsimulator jeweilige Signale simuliert, die an den Sensoren der Antennenanordnung empfangen werden. Im Gegensatz zur vorliegenden Erfindung werden bei dem bekannten Kanalsimulator aber keine geometrischen Berechnungen zur Ermittlung des Ausbreitungsverlaufs des Sendesignals durchgeführt, d.h. kein "ray tracing" der Mehrwegkomponenten des Sendesignals vollzogen, sondern es werden einfache statistische Modelle zur Beschreibung des Empfangssignals, dessen grundlegende Eigenschaften nach dem Stand der Forschung bekannt sind, herangezogen. So werden statistische Verteilungen für Laufzeitdifferenzen und Laufzeitverbreiterung, Dopplerverbreiterung, Signaldämpfungen usw. zur Berechnung herangezogen. Dadurch arbeiten das bekannte Verfahren und die bekannte Vorrichtung im Vergleich zur vorliegenden Erfindung sehr ungenau. Beispielsweise werden die Ausbreitung von Mehrwegkomponenten des Sendesignals und die dadurch entstehenden Phasenverschiebungen durch eine einfache stufenweise zeitliche Verzögerung des Sendesignals beschrieben. Diese Verzögerung kann nur in diskreten Schritten erfolgen und hängt nicht von einer gewählten Anordung von Streuobjekten ab. Da nur eine grobe statistische Berechnung des Empfangssignals stattfindet, ist das Analysieren von einzelnen Datenframes während der Simulation nicht möglich.

In einer bevorzugten Ausgestaltung der Erfindung ist das geometrische Modell zur Abbildung des Kanalmodells ein geometriebasiertes stochastisches Kanalmodell (GSCM). Es hat sich gezeigt, dass ein GSCM eine sehr gute Beschreibung eines Funkübertragungskanals bietet.

Um die tatsächlichen Verhältnisse der Signalübertragungen zwischen einer Basisstation und einer Mobilstation (z.B. einem Mobiltelefon) möglichst naturgetreu zu simulieren, erweist es sich als vorteilhaft, wenn das GSCM zur Unterscheidung zwischen Uplink und Downlink der Funkübertragung, das ist die Umkehr von Sende- und Empfangsrichtung zwischen Sendern/Empfängern, ausgebildet ist.

Hervorragende Simulationsergebnisse erzielt man, wenn das GSCM eine statistisch zufällige Anordnung der Streuobjekte in Form von Gruppen (Cluster) vorsieht, wobei vorzugsweise zwischen nahe dem Empfänger befindlichen "Near Clustern" und entfernt vom Empfänger befindlichen "Far Clustern" unterschieden wird. Dabei kann die Anzahl der Cluster durch einen stochastischen Poisson-Point-Prozess ermittelt werden. Die Simulationsberechnungen werden vereinfacht, wenn die Cluster innerhalb eines Übertragungskanals gleichverteilt sind und/oder wenn die Streuobjekte (Scatterer) innerhalb eines Clusters gleichverteilt sind.

Es existieren internationale Gremien, die Vorschläge erarbeiten, unter welchen Standard-Umgebungsbedingungen Funkübertragungssysteme getestet werden sollen und die Definitionen der Eigenschaften solcher Standard-Umgebungsbedingungen erarbeiten. So machen sich beispielsweise die verschiedenen physikalischen Phänomene, wie Reflexion, Dämpfung, Streuung von Sendesignalen unterschiedlich bemerkbar, je nachdem, ob die Funkübertragung in städtischem Gebiet oder Freiland erfolgt. Standards für solche Umgebungsbedingungen finden sich z.B. in den COST Hata bzw. COST Walfish-Ikegami Spezifikationen für Makro- und Mikro-Funkzellen. Um den erfindungsgemäßen Kanalsimulator und das Kanalsimulationsverfahren an diese spezifizierten Standard-Umgebungsbedingungen anzupassen, können im GSCM Korrekturfaktoren vorgesehen sein, mit welchen Korrekturfaktoren eine Anpassung der Simulationsberechnungen an empirisch ermittelte Ergebnisse, insbesondere nach COST Hata bzw. COST Walfish-Ikegami Standard, ermöglicht ist. Vorteilhaft sind die Korrekturfaktoren mithilfe einer Monte-Carlo-Simulation berechenbar. Zur weiter verbesserten Simulation kann das GSCM Phasen-Korrekturfaktoren umfassen, um die Phase eines Trägersignals im Rahmen einer Basisband-Simulation zu berücksichtigen.

Eine weitere Maßnahme zur noch besseren Anpassung der Simulationsberechnungen an tatsächliche Umgebungsbedingungen sieht vor, dass das GSCM zur Berücksichtigung des Einflusses von Abschattung statistisch zufällig verteilte Abschattungsobjekte (Visibility Regions) enthält, die in einer Ausgestaltung der Erfindung im Abstand zum Sender und im Azimut gleichverteilt sind. Daraus resultiert eine Abnahme der Verteilungsdichte mit zunehmender Entfernung vom Sender.

Bevorzugt kann der erfindungsgemäße Kanalsimulator eine Vielzahl von Kanälen unabhängig voneinander berechnen. Da aufgrund der vorhandenen Rechenleistung die Anzahl der Kanäle aber begrenzt ist (beispielsweise auf acht Kanäle), ist in einer Fortbildung der Erfindung vorgesehen, dass der Kanalsimulator über Synchronisationseingänge und -ausgänge verfügt, mit denen mehrere Kanalsimulatoren miteinander gekoppelt werden können, um so die Anzahl der berechenbaren Kanäle zu erhöhen.

Zur einfachen und übersichtlichen Bedienung des Kanalsimulator kann das Steuerungsmittel eine graphische Benutzeroberfläche umfassen, welche vorzugsweise eine 3D-Darstellung von Impulsantworten unterstützt.

Aufgrund des erfindungsgemäßen Ansatzes der exakten Berechnung des Ausbreitungsverlaufs der Signal-Mehrwegkomponenten ergeben sich an die Rechenleistung des erfindungsgemäßen Kanalsimulators hohe Anforderungen. Diese können dadurch erfüllt werden, dass die Signalverarbeitungsmittel zumindest einen Signalprozessor umfassen. Vorteilhaft ist der zumindest eine Signalprozessor zur Durchführung geometrischer und statistischer Berechnungen ausgebildet.

Zur weiteren Erhöhung der Rechenleistung des erfindungsgemäßen Kanalsimulators kann vorgesehen sein, dass die Signalverarbeitungsmittel Field Programmable Gate Arrays (FPGA) umfassen. Aus Geschwindigkeitsgründen ist es vorteilhaft, wenn die Field Programmable Gate Arrays (FPGA) zur Durchführung der Multiplikationen der Mehrwegkomponenten mit den Gewichtsfaktoren sowie der Überlagerung der gewichteten Mehrwegkomponenten ausgebildet sind.

Bei Mobilfunktelefonsystemen kommunizieren die Teilnehmer mit beweglichen Mobilstationen (Funktelefonen) über ortsfeste Basisstationen. Da die Teilnehmer während des Telefonierens häufig in Bewegung sind, beispielsweise in einem Fahrzeug sitzen, ändern sich somit ständig die Bedingungen des Übertragungskanals zwischen Mobilstation und Basisstation. Um diese wechselnden Bedingungen infolge der Bewegung der Mobilstation simulieren zu können ist es vorteilhaft, wenn bei der erfindungsgemäßen Kanalsimulation zumindest ein Bewegungsmodell zur Beschreibung eines bewegten Empfängers/Senders (Mobilstation) implementiert ist. Dabei kann in einer Ausgestaltung das Bewegungsmodell die Bewegung der Mobilstation durch zwei konzentrische Kreise mit unterschiedlichen Radien beschreiben, innerhalb deren sich die Mobilstation geradlinig und mit konstanter Geschwindigkeit bewegt, und an denen die Mobilstation bei Berührung reflektiert wird. In einer alternativen Ausgestaltung kann das Bewegungsmodell die Bewegung der Mobilstation durch eine Punkttabelle beschreiben, welche einzelne Punkte der Bewegung definiert, wobei die Zeitintervalle zwischen den einzelnen Punkten konstant oder variabel sein können.

Weitere Merkmale und Vorteile der vorliegenden Erfindung ergeben sich aus der nachfolgenden Beschreibung beispielhafter Ausführungsformen. In den Zeichnungen zeigen:

Fig. 1 einen Übertragungsrahmen bei GSM-Mobilfunk;
Fig. 2 einen Übertragungskanal zwischen GSM-Sender und GSM-Empfänger;
Fig. 3 ein Beispiel für einen Funk-Übertragungskanal im städtischen Bereich;
Fig. 4 ein Blockschaltbild des erfindungsgemäßen Kanalsimulators;
Fig. 5 ein Blockschaltbild von N miteinander gekoppelten Kanalsimulatoren;
Fig. 6 ein Blockschaltbild eines aus integrierten Schaltkreisen aufgebauten Kanalsimulators;
Fig. 7 den Aufbau eine COST-Struktur;
Fig. 8 eine symbolische Darstellung von Makro-, Mikro- und Pikozellen in einem GSM-Netz;
Fig. 9 das Prinzip eines geometrisch stochastischen Kanalmodells GSCM;
Fig. 10 das geometrisch stochastische Kanalmodell in einem kartesischen Koordinatensystem;
Fig. 11 Pfade im GSCM;

Fig. 12 Beispiel ein Azimut-Delay-Power-Spectrum ADPS;

Fig. 13 ein Power-Delay-Profile und ein Azimut-Power-Spectrum;

Fig. 14 ein Diagramm zur Bestimmung von Scatterer-Positionen;

Fig. 15 ein Diagramm der Simulationsgenauigkeit in Abhängigkeit von der Scattererzahl;

Fig. 16 ein Jacobian-"Badewannen"-Diagramm aus einer Jacobian-Transformation;

Fig. 17 ein Diagramm für die Amplituden-Wahrscheinlichkeitsdichteverteilung bei einem Rayleigh-Prozess;

Fig. 18 ein Diagramm für die Phasen-Wahrscheinlichkeitsdichteverteilung bei einem Rayleigh-Prozess;

Fig. 19 eine Summenvektordarstellung von Mehrwegkomponenten;

Fig. 20 eine Darstellung der durch den Hochfrequenz-Träger bedingten Phasenverschiebung eines Übertragungskanals;

Fig. 21 ein Diagramm der durchschnittlichen Dämpfung zwischen Sende- und

Empfangsstation in Abhängigkeit des Abstandes zueinander, nach dem COST-Hata-Modell bzw. dem COST-Walfish-Ikegami-Modell;

Fig. 22 ein Flussdiagramm des grundlegenden Aufbaus des Simulationsalgorithmus;

Fig. 23 ein Flussdiagramm des Ablaufs der Kanalsimulation; und

Fig. 24 ein Diagramm mit Beispielswerten von CAS, CDS und Shadowing;

Die Erfindung wird im folgenden anhand eines Mobilfunksystems, wie z.B. GSM, erläutert, ist aber nicht darauf beschränkt. Andere Anwendungen der Erfindung betreffen die Entwicklung und Erforschung von intelligenten Antennensystemen, insbesondere die Erprobung von Algorithmen zur Veränderung der Richtcharakteristik solcher intelligenter Antennensysteme. Weitere Anwendungen betreffen Funkmikrophonsysteme und drahtlose Funknetze (Wireless LAN). Allgemein bietet die Erfindung die Möglichkeit ein Abbild eines Funkübertragungskanals zwischen einem Funksender und einem Funkempfänger bereitzustellen, so dass zugunsten von Labortests auf teure und zeitaufwändige Feldversuche verzichtet werden kann, wobei der simulierte Funkübertragungskanal jederzeit reproduzierbar ist. Dabei können mit dem erfindungsgemäßen Kanalsimulator im Labor beliebige Beeinträchtigungen und Beeinflussungen des Funkübertragungskanals durch Umgebungsbedingungen oder unvollkommene Funkausrüstung nachgestellt werden. Der erfindungsgemäße Kanalsimulator arbeitet in Echtzeit, wobei auch die Parameter des simulierten Funkübertragungskanals in Echtzeit verändert werden kann. Weiters kann der Kanalsimulator für Langzeitmessungen eingesetzt werden und können während der Simulation einzelne Datensegmente ausgewählt und analysiert werden. Optional kann der Kanalsimulator mit einer Rauschquelle zur Nachbildung von Kanalrauschen ausgestattet sein, wobei die Rauschquelle auf einem Pseudo-Zufallsgenerator basieren kann.

Zur besseren Verständlichkeit der nachfolgenden Beschreibung wird zunächst ein Funkübertragungssystem anhand des GSM-Übertragungsprinzips erläutert.

## Übertragungsprinzipen von GSM

Bei GSM-Mobilfunknetzen werden (Sprach-)Informationen als digitale Daten übertragen. Um eine möglichst große Anzahl von Verbindungen zu ermöglichen, verwendet GSM ein TDMA-(Time Division Multiplex Access) und FDMA- (Frequency Division Multiplex Access) Zugriffsverfahren (Frequenz- bzw. Zeitvielfach). Das bedeutet, dass alle Verbindungen auf unterschiedliche Frequenzen und/oder unterschiedliche Zeitrahmen aufgeteilt werden. Der zeitliche Ablauf wird in sogenannte Zeitrahmen strukturiert, wobei jeder einzelne Rahmen einem bestimmten Gesprächsteilnehmer zugeordnet ist. Jedem Gespräch ist somit eine Frequenz und ein Zeitrahmen zugeordnet.

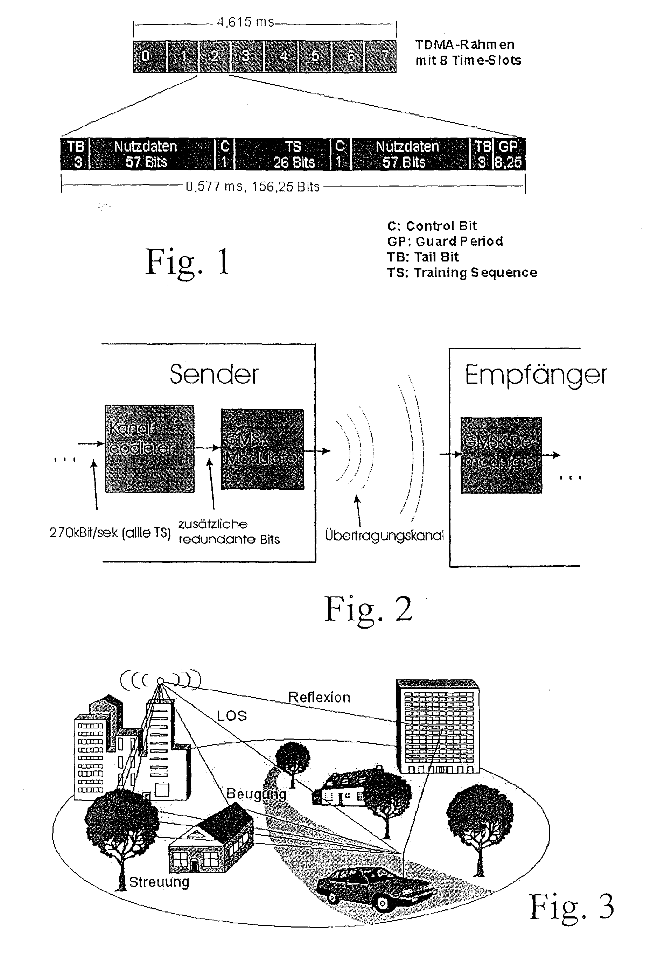

Als Modulationsverfahren wird bei GSM "gaussian minimum shift keying" (GMSK) verwendet, das ein Phasenmodulationsverfahren ist. Die Information steckt dabei in den Phasenübergängen, wobei aufgrund der Modulation mit Gauss-Impulsen die Kanalbandbreite lediglich 200kHz beträgt. GSM kann als ein schmalbandiges System angesehen werden. Die Simulation der Übertragung über einen schmalbandigen Kanal ist wesentlich einfacher als jene eines breitbandigen Kanals. Der Grund liegt einfach darin, dass unterschiedliche Frequenzen unterschiedliches Übertragungsverhalten aufweisen. Hindernisse wie Häuser oder Berge reflektieren unterschiedliche Frequenzen verschieden gut. Daher kann davon ausgegangen werden, dass alle Spektralanteile eines Signals mit einer schmalen Bandbreite von 200kHz gleichartig reflektiert werden. Da die Bandbreite bei GSM 200kHz beträgt, sind die Trägerfrequenzen in einem Frequenzabstand von 200kHz angeordnet, wobei z.B. bei GSM900 in Downlink-Richtung (d.h. bei Übertragung von einer Basisstation zu einer Mobilstation) zwischen 935MHz und 960MHz 124 Trägerfrequenzen untergebracht sind. Jeder dieser Kanäle ist wiederum in acht Timeslots (TS) unterteilt, was als TDMA (Time Division Multiple Access) bezeichnet wird, wobei für jeden GSM-Teilnehmer ein Timeslot eines Übertragungskanals vorgesehen ist. Somit können bei diesem TDMA-Verfahren bis zu acht Mobilfunkübertragungen die gleiche Frequenz innerhalb einer Zelle verwenden. Zur Simulation einer GSM-Übertragung von der Basisstation zur Mobilstation wird daher nur ein Timeslot benötigt. Ein Timeslot besteht wiederum aus 156,25 Bits, welche verschiedene Funktionen haben. Fig. 1 zeigt einen GSM-Übertragungsrahmen, bestehend aus acht Zeitschlitzen, wobei der detailliert dargestellte Timeslot Nr. 2 einen Burst aufweist, wie er bei einer Informations(Sprach)-Übertragung auftritt

Fig. 2 zeigt ein Blockschaltbild eines GSM-Funkübertragungssystems, mit einem GSM-Sender, der Sendesignale ausstrahlt, einem Übertragungskanal, in dem die Sendesignale übertragen werden, und einem GSM-Empfänger, der die übertragenen Signale empfängt. Der GSM-Sender besitzt einen Kanalcodierer, der dem zu übertragenden Datenstrom weitere redundante Bits zur Fehlererkennung und Fehlerkorrektur hinzufügt, um Störungen im Übertragungskanal, die zu falsch übertragenen Bits führen, am Empfänger korrigieren zu können. Dabei werden zyklische Codes mit Fehlererkennung und -korrektur verwendet. Der Bitstrom am Ausgang des Kanalcodierers wird mit Hilfe des GMSK-Modulators moduliert, wobei dadurch Signale erzeugt werden, deren Informationsinhalt in den Phasenübergängen liegt. Der GSM-Empfänger weist einen GMSK-Demodulator auf, um die empfangenen Signale zu demodulieren.

Zusätzlich zu den beschriebenen Verfahren TDMA bzw. FDMA wird bei GSM noch eine spezielle Art des SDMA (Space Division Multiplex Access) verwendet, indem das gesamte Sendegebiet eines Mobilfunknetzes in einzelne (Funk-)Zellen unterteilt wird. Die Unterteilung des Sendegebietes in Zellen ermöglicht die Verwendung gleicher Frequenzen in einander nicht überlappenden Zellen, ohne dass Gleichkanal-Interferenzen auftreten. Man unterscheidet bei den Zellen zwischen Makro-, Mikro- und Picozellen, deren Eigenschaften weiter unten näher erklärt werden.

## Der Übertragungskanal zur Funksignalausbreitung

Die Qualität jeder Funkübertragung wird vor allem durch den Übertragungskanal zwischen Sender und Empfänger beeinflusst, in dem die Ausbreitung der Funkwellen stattfindet. Ein Beispiel für einen Übertragungskanal im städtischen Bereich wird anhand von Fig. 3 erläutert.

Im freien Raum breiten sich Funkwellen unabhängig von ihrer Frequenz geradlinig aus. In der Atmosphäre jedoch beeinflussen verschiedene Faktoren die Ausbreitungscharakteristik von Funkwellen. Die Dämpfung der Funkwellen ist dabei abhängig von ihrer Frequenz. Während niedrige Frequenzen kaum durch atmosphärische Störungen gedämpft werden, tritt bei höheren Frequenzen ab ca. 12 GHz bereits bei Nebel oder Regen eine starke Dämpfung durch Streuung und Absorption auf.

Es existieren in der Realität immer auch zusätzliche Hindernisse im Ausbreitungspfad der Funkwellen. Je nach örtlicher Begebenheit können dies Bäume, Berge, einzelne Gebäude oder in Städten die Straßenschluchten sein, die die direkte Sichtverbindung zum Sender (Line-of-Sight - LOS) behindern. Solche Hindernisse werden zusammenfassend als Streuobjekte, Scatterer oder Streuer bezeichnet. Ebenso wie die Dämpfung in der Atmosphäre sind auch die Einflüsse von Streuobjekten auf die Funkwellen frequenzabhängig. Die Funksignale werden von den Streuobjekten zumeist nicht komplett absorbiert (Abschattung), sondern können durch diese reflektiert werden. Sind die Streuobjekte kleiner oder gleich der Wellenlänge des Signals, kann es an diesen gestreut werden. Die Streuung bewirkt, dass das Signal in viele Einzelsignale aufgespaltet wird, die in verschiedene Richtungen weiterlaufen. Ein Signal wird besonders in Städten oft mehrmals an Gebäuden reflektiert und wandert so die Straßen entlang, bis es den Empfänger erreicht. Das gesendete Signal kann sich dabei in mehrere Komponenten, sogenannte Mehrwegkomponenten (multi path components - MPC) aufteilen, die den Empfänger auf unterschiedlichen Pfaden erreichen. Diese Mehrwegausbreitung (multi path propagation - MPP) hat zwei wesentliche, die Übertragungsfehlerrate erhöhende Effekte auf die Ausbreitung der Funkwellen und damit auf die Signalstärke, die beim Empfänger eintrifft. Zum einen kommt es durch die unterschiedlich langen Wege vom Sender zum Empfänger zu einer Laufzeitdispersion (delay spread), indem die Mehrwegkomponenten eines einzelnen Sendesignals den Empfänger auf verschiedenen Wegen und damit auch zu verschiedenen Zeitpunkten erreichen. Der Sendeimpuls wird dadurch zeitlich verbreitert bzw. verschmiert. Als Folge davon werden einzelne Signale überlagert, was als Intersymbolinterferenz ISI bezeichnet wird. Typische Werte für die Laufzeitdispersion in Städten liegen bei ca. 3 μs bis zu ca. 12 μs. GSM muss bis zu Laufzeitunterschieden von bis zu 16 μs funktionieren.

Der andere durch Mehrwegausbreitung auftretende Effekt ist das sogenannte Fading. Eine bewegte Mobilstation als Empfänger empfängt im Allgemeinen ein Mehrwegsignal, das zeit- und ortsabhängig ist. Die verschiedenen Signalanteile, die beim Empfänger eintreffen, können daher verschieden lange Wege zurückgelegt haben. Unter diesen Signalanteilen kann auch ein solcher sein, der einen direkten Pfad zwischen Sender und Empfänger zurückgelegt hat (Line of Sight). Gegenüber diesem direkten Pfad besitzen andere Signalanteile eine Zeitverzögerung und dadurch eine Phasenverschiebung. Diese überlagern sich an der Antenne der Mobilstation und können einen größeren Empfangspegel als der ohne Mehrwegkomponenten ergeben (konstruktive Interferenz). Im ungünstigsten Fall können sich diese Mehrwegkomponenten jedoch gegenseitig durch destruktive Interferenz auslöschen. Im letzen Fall spricht man von Schwund (Fading). Im Allgemeinen macht sich dieser Effekt durch periodische Pegeleinbrüche im Empfangssignal bemerkbar, und zwar in Abständen in der Größenordnung der halben Wellenlänge. Weil sich diese Einbrüche ziemlich schnell wiederholen (die Zeit, um diese Strecke mit einer mittleren Geschwindigkeit zu durchqueren, liegt ungefähr im Millisekundenbereich), wird dieser Schwund auch als schnelles Fading (fast Fading) bezeichnet. Eine andere Bezeichnung für diesen Schwund ist Small Scale Fading. Die Fadingeinbrüche werden umso kleiner, je stärker eine der Komponenten des Mehrwegsignals gegenüber der anderen Komponente ist. Bei direkter Sichtverbindung zwischen dem Sender und Empfänger gibt es meist eine solche dominierende Signal-Komponente. Man nennt einen Übertragungskanal, welcher eine dominierende Signal-Komponente hat, einen Rice-Kanal und dementsprechend spricht man von Rice'schem - Fading.

Eine andere Art von Pegeleinbrüchen des Empfangssignals ist das langsame Fading (Slow Fading). Das wird durch großräumige Hindernisse in der Sichtlinie zwischen Sender und Empfänger hervorgerufen. Aufgrund dieser Hindernisse verschwinden Übertragungswege, und es kommen neue hinzu. Das Fehlen dieser direkten Signalkomponente (Line of Sight) macht sich im Empfangssignal als Dämpfung bemerkbar. Solche Hindernisse, die Abschattungen verursachen, können für eine Mobilstation in Strecken bis 100 Metern wirksam bleiben. Die Zeit, um diese Strecke mit einer mittleren Geschwindigkeit zu durchqueren, liegt ungefähr im Sekundenbereich. Das ist verglichen mit der Periode der Pegeleinbrüche beim Fast Fading sehr lang, und entsprechend wird dieser Schwund als langsamer Schwund bezeichnet (Slow Fading). Eine andere Bezeichnung für diesen Schwund ist Large Scale Fading.

**Hardwarearchitektur des erfindungsgemäßen Kanalsimulators**

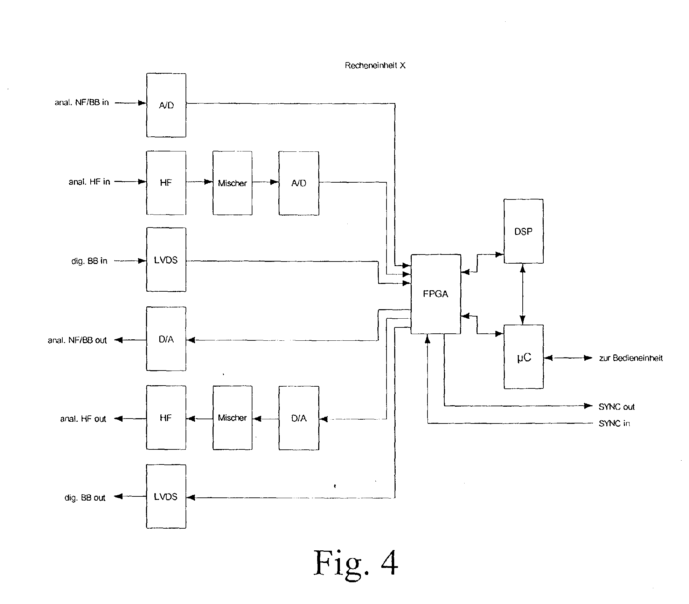

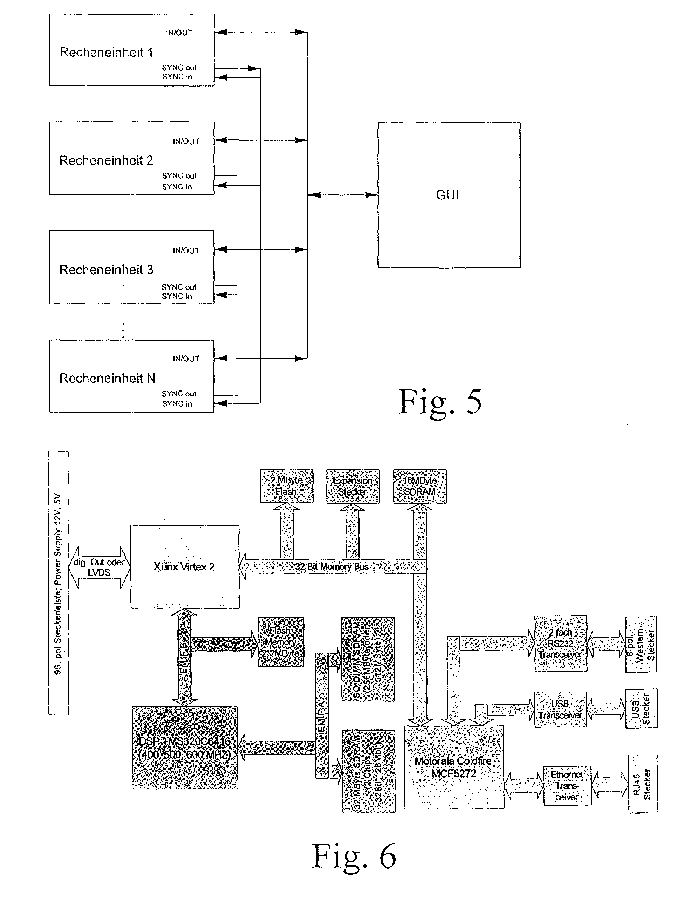

Um die oben beschriebenen Einflüsse, denen ein Übertragungskanal ausgesetzt ist, im Labor untersuchen und reproduzierbar nachvollziehen zu können, wurde der vorliegende Kanalsimulator zur Simulation zumindest eines Übertragungskanals zwischen Sendesignale ausstrahlenden Sendern und Empfängern eines digitalen oder analogen Funkübertragungssystems entwickelt, der in einem Ausführungsbeispiel in Fig. 4 im Blockschaltbild dargestellt ist. Der Kanalsimulator umfasst eine Vielzahl von Signaleingängen, an die Sendesignale repräsentierende Eingangssignale angelegt werden können. Insbesondere umfasst der Kanalsimulator einen Eingang für analoge Niederfrequenzsignale (anal. NF in), die von einem Eingangs-Analog/Digital-Wandler (A/D) in digitale Signale umgewandelt werden; einen Eingang für analoge Hochfrequenzsignale (anal. HF in), die in einem Mischer in analoge Basisbandsignale umgewandelt und anschließend in einem Analog/Digital-Wandler (A/D) in digitale Signale umgewandelt werden; einen Eingang für digitale Basisbandsignale (dig. BB in), die einer Differenzsignalschaltung (Low Voltage Differential Signaling LVDS) zugeführt werden. Die digitalen oder digitalisierten Eingangssignale werden einer Signalverarbeitungseinheit zugeführt, die aus einem Field Programmable Gate Array (FPGA) und einem digitalen Signalprozessor DSP besteht. Ein Steuerungsmittel (μC) steuert das Field Programmable Gate Array FPGA und den digitalen Signalprozessor DSP und bildet eine Schnittstelle zu einer Bedieneinheit. SYNC_in und SYNC_out Leitungen dienen dazu, N Kanalsimulatoren zu koppeln, um die Anzahl der berechenbaren Kanäle zu vervielfachen, wie im Blockschaltbild von Fig. 5 dargestellt, wobei alle N Kanalsimulatoren von einer Bedieneinheit GUI gesteuert werden.

Wieder auf Fig. 4 Bezug nehmend, stellen die Steuerungsmittel μC der Signalverarbeitungseinheit FPGA, DSP ein oder mehrere durch Kanalparameter definierte(s) Kanalmodell bereit, das/die die Signalformungseigenschaften zumindest eines zu simulierenden Übertragungskanals festlegt/festlegen. Erfindungsgemäß bildet die Signalverarbeitungseinheit FPGA, DSP anhand der Kanalparameter das eingestellte Kanalmodell als geometrisches Modell mit einer Vielzahl von Streuobjekten ab und wendet dieses geometrische Modell zur Formung des Eingangssignal an, um somit in Echtzeit-Berechnung des Ausbreitungsverlaufs von Mehrwegkomponenten des Eingangssignals ein Ausgangssignal zu erzeugen, wobei die Mehrwegkomponenten durch Streuung, Reflexion und Beugung des Eingangssignals an den Streuobjekten des geometrischen Modells hervorgerufen werden. Die Ausgabe des Ausgangssignals erfolgt entweder über einen Digital/Analog-Wandler (D/A) als analoges Niederfrequenzsignal (anal. NF out), oder über einen Digital/Analog-Wandler (D/A) und einen Mischer, der das Signal in den Hochfrequenbereich transformiert, als analoges Hochfrequenzsignal (anal. HF out), oder direkt über eine Differenzsignalschaltung (LVDS) als digitales Basisbandsignal (dig. BB out).

In der dargestellten Ausführungsform der Erfindung bildet die Signalverarbeitungseinheit das geometrische Modell des Kanalmodell durch Multiplikation der Mehrwegkomponenten des Eingangssignals und anschließende Überlagerung der Mehrwegkomponenten ab, wobei zusätzlich die Mehrwegkomponenten mit Gewichtsfaktoren gewichtet werden, die bestimmte physikalische Effekte des zu simulierenden Übertragungskanals entsprechen, wie sie sich aus den Kanalparametern des Kanalmodells ergeben. Die Simulationsberechnung kann dabei gemäß der folgenden Formel erfolgen:

$$Y = H*X$$

$$H = H_{LOS} + \sum_{k=0}^{N_{NS}} H_{NS}(k) + \sum_{n,m}^{N_{FC}, N_{FS}} H_{FS}(n,m)$$

| | |
|---|---|
| Y... | komplexes Ausgangssignal des Kanalsimulators |
| H... | komplexe Impulsantwort des Kanalsimulators |
| X... | komplexes Eingangssignal des Kanalsimulators |
| $H_{LOS}$... | komplexe Impulsantwort der Line-of-Sight (LOS)-Komponente |
| $H_{NS}(k)$... | komplexe Impulsantwort des k-ten Scatterers (Streuobjekt) im "near scatter cluster" |
| $N_{NS}$... | Anzahl der Scatterer in der "near scatter area" |
| $H_{FS}(n, m)$... | komplexe Impulsantwort des m-ten Scatterers im n-ten "far scatter cluster" |
| $N_{FC}$ ... | Anzahl der "far scatter cluster" |
| $N_{FS}$ ... | Anzahl der Scatterer in einer "far scatter area" |

Aufgrund der exakten Berechnung und der erwünschten Echtzeitfähigkeit ergeben sich äußerst hohe Anforderungen an die Rechenleistung des Kanalsimulators, welche die Verarbeitungsgeschwindigkeiten von derzeitigen digitalen Signalprozessoren übersteigen, da solche Prozessoren die Signalverarbeitung rein sequentiell durchführen. Aus diesem Grund wurde beim dargestellten Ausführungsbeispiel des erfindungsgemäßen Kanalsimulators die Signalverarbeitungseinheit mit einer hybriden Architektur realisiert, welche den Signalprozessor DSP für die gesamten geometrisch-statistischen Berechnungen und die Ermittlung der Gewichtsfaktoren, sowie das Field Programmable Gate Array (FPGA) zur Durchführung der Multiplikationen der Mehrwegkomponenten mit den Gewichtsfaktoren sowie der Überlagerung der gewichteten Mehrwegkomponenten vorsieht. Ein Blockschaltbild eines Aufbaus des erfindungsgemäßen Kanalsimulators mit integrierten Schaltkreisen ist in Fig. 6 dargestellt. Dabei werden über eine 96-polige Steckerleiste die Eingangs- und Ausgangssignale und die Stromversorgung geführt. Als FPGA kommt der Typ Xilinx® Virtex 2 zur Anwendung, der eine eigene Channel Engine bildet und eine Architektur mit hochgradig paralleler Verarbeitung aufweist und darüber hinaus rekonfigurierbar ist. Dieser Bausteine kann mittels der Hardwareprogrammiersprache VHDL konfiguriert werden. Neben der Einbindung eigener synthesefähiger VHDL -Bibliothekselemente werden Soft- und Hardmacros unterstützt. Softmacros sind parametrisierbare digitale Grundstrukturen wie Zähler, Speicher usw., die in das Design blockweise integriert werden. Hardmacros sind fertig entwickelte Funktionsblöcke mit abgeschlossener interner Platzierung und Verdrahtung. Bei dem verwendeten Virtex 2 Baustein sind vierzig 18bit x 18bit Multiplizierer und genauso viele RAM-Blöcke als Hardmacros vorhanden. Dies verdeutlicht neben der Geschwindigkeit, mit der Operationen durchgeführt werden, die Vorteile von FPGAs gegenüber DSPs. Der digitale Signalprozessor DSP ist ein Typ DSP TMS320C6416 von Texas Instruments®. Die Firmware sowohl des FPGA als auch des DSP befindet sich in einem Flash Memory 2+2 MByte, das über einen Datenbus (External Memory Interface) EMIF B mit dem FPGA und dem DSP verbunden ist. Der DSP ist über einen weiteren Datenbus EMIF A mit zwei 32 MByte SDRAM Bänken verbunden. Das FPGA ist über eine 32 Bit breiten Speicherdatenbus mit einem Flash-Memory, einem Expansion Stecker, einem SDRAM und einem Schnittstellenbaustein vom Typ Motorola® Coldfire MCF5272 verbunden, der verschiedene genormte Schnittstellen ansteuert, wie eine serielle RS232-Schnittstelle, eine USB-Schnittstelle und eine Ethernet-Schnittstelle.

Die gesamte Simulationsumgebung wird von einem nicht dargestellten Personal Computer (PC) gesteuert. Je nachdem, welches Umgebungsszenario (Radio Environment) für die Signalübertragung gewählt wird, werden Initialisierungsdaten vom PC zum DSP übermittelt. In dem DSP wird zunächst das Sendesignal generiert und vorbereitet. Außerdem wird das Sendesignal moduliert und werden die geometrischen Berechnungen durchgeführt. Die modulierten Daten werden im nächsten Schritt an den FPGA weitergegeben, in dem die eigentliche Signalbeeinflussung des Kanals durchgeführt wird.

Für den Entwurf der Hardware-Struktur ist die genaue Aufgabenteilung zwischen DSP u. FPGA entscheidend. Diese wurde wie folgt gewählt:

- Für das Simulieren von Signalverfälschung in einem Funkübertragungskanal werden folgende Störungen infolge der Mehrwegausbreitung in der Channel- Engine berechnet:

    o Dämpfung im Kanal
    o Phasenverschiebung infolge Mehrwegausbreitung
    o Signalverzögerung als Folge der unterschiedlich langen Wege der Mehrwegkomponenten
    o Änderungen der Kanalparameter innerhalb eines Timeslots aufgrund der Bewegung des Empfängers.

- Zusätzlich ist in der Channel-Engine ein Rauschgenerator zur Simulation des Rauschens im Funkübertragungskanal implementiert, wobei die Rauschleistung variierbar ist

- Neben den erwähnten Effekten werden in der Channel Engine noch Störsignale aus anderen Quellen dem Sendesignal überlagert

- Um eine kontinuierliche Datenverarbeitung und somit eine hohe Datenrate zu erreichen, ermöglicht das Channel-Engine-Modell eine kontinuierliche Kommunikation mit dem DSP.

- Als Eingangssignal der Channel Engine wird das komplexe Sendesignal in der Darstellung mit Betrag und Phase verwendet. Am Ausgang der Channel-Engine soll das berechnete Empfangssignal in der Darstellung mit Real- und Imaginärteil auftreten.


**Das geometrisch stochastische Kanalmodell**

Vorzugsweise kommt beim erfindungsgemäßen Kanalsimulator ein geometrisch stochastisches Kanalmodell GSCM zum Einsatz, das die derzeit besten Simulationsergebnisse erzielt. Um dieses GSCM zu verstehen, ist es nötig, einige Grundbegriffe von Kanalmodellen zu erläutern.

Unter der Bezeichnung Übertragungskanal (bzw. Mobilfunkkanal bei Mobilfunknetzen) versteht man die Summe aller Ausbreitungsbedingungen der gesamten Strecke zwischen Sender und Empfänger. Die Atmosphäre (mit Schneefall, Regen,...), Städtebau (Straßen, Gebäuden,...), Landschaften (Wälder, Berge,...), Fahrzeuge, Menschen, usw. tragen jeweils für sich in bestimmtem Ausmaß zur gesamten Wellenausbreitung bei. Oft ist es in der Mobilkommunikation notwendig, bestimmte Effekte isoliert zu untersuchen. Wegen der hohen Zahl der beeinflussenden Faktoren ist es äußerst schwierig, den Einfluss der Effekte als Gesamtes zu untersuchen. Im Zusammenhang mit dem Aufbau und der Standardisierung von Mobilfunksystemen spielen die Übertragungseigenschaften des Mobilfunkkanals eine wichtige Rolle. Aufgrund der Vielzahl von Erscheinungen bei der Freiraumausbreitung (z.B. Reflexionen, Streuungen) von Wellen kann eine vollständige qualitative und quantitative Beschreibung des Übertragungskanals praktisch nur durch Kanalmessungen unter realen Einsatzbedingungen erfolgen. Da solche Messungen jedoch sehr zeit- und kostenaufwändig sind, ergibt sich die Forderung nach geeigneten Modellen, um so das Übertragungsverhalten des Mobilfunkkanals möglichst realitätsnah nachzubilden. Als Hilfsmittel dafür werden Kanalmodelle benötigt, die anhand von empirischen Ausbreitungsmessungen gewonnen werden.

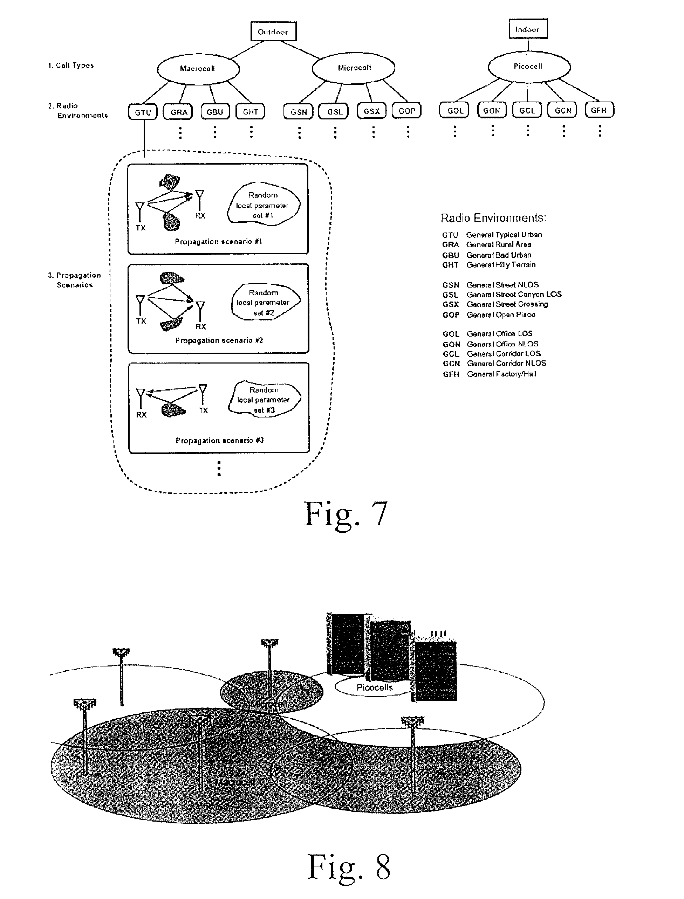

Die Ausbreitung von Funkwellen ist stark von den oft extrem unterschiedlichen topographischen und physikalischen Merkmalen der Umgebung abhängig. Zur Einstufung dieser Vielzahl von Gegebenheiten wurde eine standardisierte Struktur aus drei Ebenen von COST259 SWG2.1 definiert, die in Fig. 7 dargestellt ist. Die oberste Ebene enthält eine erste Unterscheidung der Zelltypen. Für jeden Zelltyp wurden einige REs (radio environment) festgelegt, wobei alle deren Abkürzungen mit einem "G" für "general" beginnen, um zu betonen, dass ein RE eine ganze Klasse von Ausbreitungskonstellationen mit ähnlichen oder typischen Merkmalen beschreibt.

Für jeden Zelltyp wiederum in Ebene 2 des Modells verschiedene typische Umgebungen (Radio Environments) definiert. Weiters wird für die typischen Umgebungen ein Satz von Parametern definiert, die in die auf diesem Modell basierenden Simulationen einfließen. Diese werden in Externe, Lokale und Globale Parameter aufgeteilt. Externe Parameter sind jene, die für alle Simulationen gleich bleiben, z.B. Frequenz, durchschnittliche Höhe der Basisstationen (BS) und Mobilstationen (MS), durchschnittliche Distanz zwischen MS und BS usw. Die globalen Parameter beeinflussen in erster Linie die Wahrscheinlichkeitsdichte der lokalen Parameter. Der Einfluss der lokalen Parameter ist in der Ebene 3 des COST-Modells zu sehen. Zu den lokalen Parametern zählen Angaben über Größe, Platzierung und elektrische Beschaffenheit von Objekten (Berge, Gebäude, ...), die in bestimmten Simulationsszenarios definiert werden. Bei der Simulation beeinflussen diese Parameter folgende Simulationsgrößen:

- Anzahl der Richtungen, aus denen reflektierte - bzw. LOS-Wellen eintreffen
- Phasenverschiebung des Empfangsignals
- Verzögerung der Mehrwegkomponenten
- Anzahl der Streuergruppen ( Cluster ).

In Fig. 8 ist ein GSM-Netz mit Makro-, Mikro- und Piko-Funkzellen dargestellt.

Makrozellen sind Funkzellen, die in der Lage sind, ein großes Gebiet abzudecken. Sie werden ausschließlich in Gebieten mit wenig Gesprächsaufkommen verwendet. Diese Zellen haben die größten Radien mit einem Ausmaß zwischen 1 km und 10km und sind somit ausschließlich für den Freiland-Bereich konzipiert. Die Antennen sind oberhalb des Niveaus der umliegenden Gebäudedächer moniert.

Mikrozellen werden in Gebieten eingesetzt, in denen ein großes Gesprächsaufkommen herrscht, z.B. in Städten. Die Sendeleistung dieser Funkzellen ist sehr gering, sie decken ein Gebiet ab das etwa der Reichweite der Basis eines DECT Haustelefons entspricht. Durch die geringe Reichweite dieser Antennen können innerhalb einer Stadt zum Beispiel die Sendefrequenzen sehr oft wiederholt werden, folglich kann das GSM-Netz in diesen Gebieten ausreichend Gesprächskanäle zur Verfügung stellen.

Pikozellen sind kleiner als Mikrozellen. Sie sollen meistens nur innerhalb eines Gebäudes eine Versorgung gewährleisten.

Im Gegensatz zu den durch empirische Ausbreitungsmessungen gewonnenen Kanalmodellen basiert das geometrisch stochastische Kanalmodell auf der exakten geometrischen Bestimmung einer stochastisch, also zufällig erzeugten virtuellen Landschaft, deren Übertragungseigenschaften mit Hilfe von Wahrscheinlichkeitsdichtefunktionen und Leistungsprofilen beschrieben werden.

Die Ausbreitungsbedingungen eines jeden REs werden durch gewisse spezifizierte Parameter, Wahrscheinlichkeitsdichte-Funktionen (probability density function - PDF) und Leistungsprofile (power profiles) beschrieben. Da sie die Ausbreitungsbedingungen des vollkommenen REs charakterisieren, werden sie globale Parameter (GP) genannt. Diese dienen als Schlüsselparameter und liefern die notwendige Information für grundlegende Systemdesign-Entscheidungen über Modulationstechnik, Burst-Länge, Codierungsschema, etc. Globale Parameter werden durch umfassende Messkampagnen gewonnen.

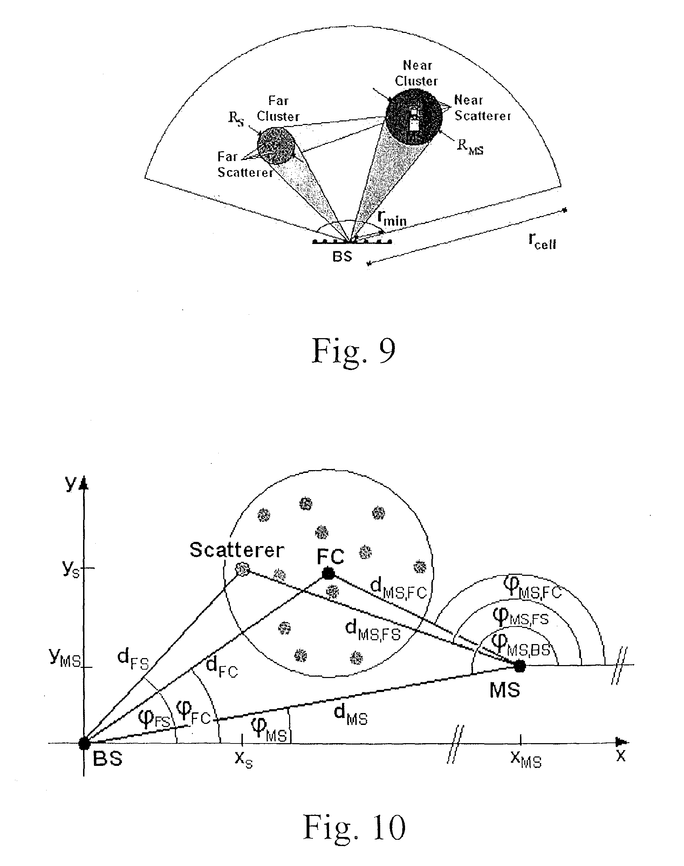

Als weiterer Teil in der Anordnung sind die Scatterer zu finden. Jeder dieser Scatterer trägt eine Signal-Mehrwegkomponente MPC. Messungen haben ergeben, dass Scatterer vorwiegend in Gruppen (Cluster) auftreten, innerhalb derer die Reflexionspunkte mehrerer MPCs so dicht beieinander liegen, dass sie annähernd die gleichen Ausbreitungsbedingungen erfahren und den Empfänger annähernd zeitgleich erreichen. Diese lokalen Streuungen ereignen sich typischerweise im nahen Umkreis um die Mobilstation MS, welche dann als Near Scatterer (NS) im Near Cluster (NC) verteilt sind. Aber auch an entfernten Objekten können sich Reflexionen ereignen. Diese Gebiete werden als Far Cluster (FC) bezeichnet und beinhalten Far Scatterer (FS) (Fig. 9). Für die BS wird in Makrozellen angenommen, dass die Antenne hoch genug platziert ist, sodass sich hier keine lokalen Reflexionen ereignen und es somit für die BS keinen Near Cluster gibt.

Fig. 9 zeigt das Prinzip eines geometrisch stochastischen Kanalmodells GSCM. Die Basisstation BS steht im Ursprung des Koordinatensystems und hat somit die Koordinaten:

$$\vec{x}_{BS} = \begin{pmatrix} x_{BS} \\ y_{BS} \\ z_{BS} \end{pmatrix} \equiv \begin{pmatrix} 0 \\ 0 \\ h_{BS} \end{pmatrix}.$$

Ihre Höhe $h_{BS}$ wird abhängig vom RE bestimmt und beschreibt die zentrale Position der BS-Antenne. In der Zelle kann naturgemäß nur eine BS vorkommen, es kann aber mehrere BS-Antennen geben.

Eine Mobilstation kann normalerweise im Bereich zwischen den Innen- und Außengrenzen frei bewegen. Ihre Position ist durch die kartesischen Koordinaten:

$$\vec{x}_{MS} = \begin{pmatrix} x_{MS} \\ y_{MS} \\ z_{MS} \end{pmatrix} = \begin{pmatrix} x_{MS} \\ y_{MS} \\ h_{MS} \end{pmatrix}$$

bestimmt, wie in Fig. 10 dargestellt.

Die erfindungsgemäße Kanalsimulation erfolgt durch eine exakte Berechnung des Ausbreitungsverlaufs der einzelnen Mehrwegkomponenten des Signals, welche durch Streuung, Reflexion und Beugung an den entsprechend dem gewählten Kanalmodell und statistischen Modellen angeordneten Streuobjekten (Streuer, Scatterer) hervorgerufen werden (ray tracing).

Es werden die einzelnen physikalischen Effekte eines Kanals errechnet, welche durch eine statistische Verteilung von Streuern und statistisch zufällig verteilten Visibility Regions (Bereichen mit Abschattung) berücksichtigt. Daraus werden Gewichtsfaktoren berechnet, welche die einzelnen physikalischen Effekte des Kanals subsumieren. Die Simulation erfolgt durch Multiplikation der Mehrwegkomponenten, welche entsprechend den Ausbreitungspfaden zeitlich gegenüber dem Basisbandsignal verzögert wurden, mit dieser Gewichtsfaktoren und durch Überlagerung dieser gewichteten Mehrwegkomponenten. Dies entspricht der Überlagerung der Mehrwegkomponenten und dem Entstehen von Interferenz in der Realität.

**Softwarearchitektur des erfindungsgemäßen Kanalsimulators**

**Ermittlung der Gleichungen zur Berechnung der Gewichtsfaktoren anhand des GSCM**

Cluster und Scatterer

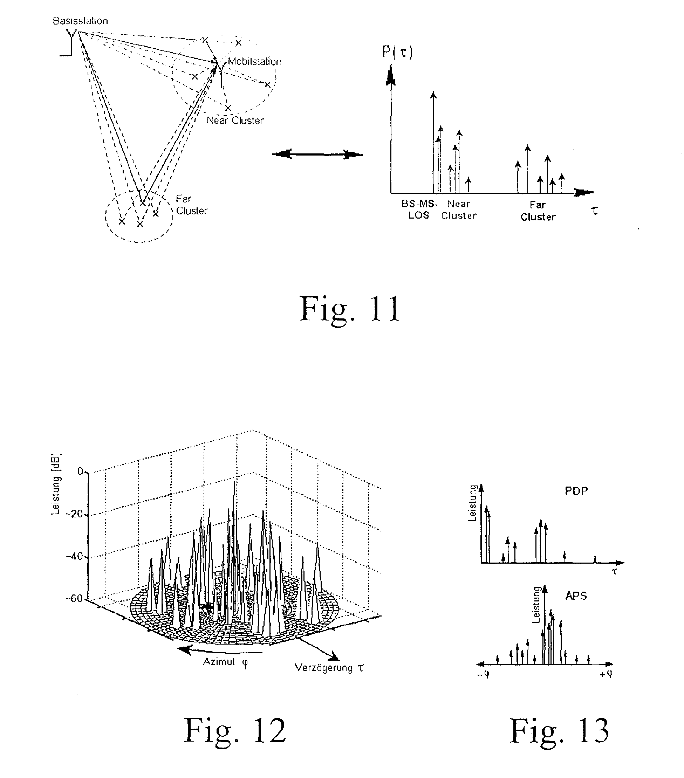

Messungen haben gezeigt, dass in einigen REs die Laufzeiten der Mehrwegkomponenten (MPC, multipath component) nicht gleichverteilt sind, sondern typischerweise in Gruppen die Empfangsantenne erreichen. Diese haben verhältnismäßig hohe Amplituden, die entweder durch die Nähe zum Empfänger oder durch die große Reflexionsfläche begründbar sind. Die MPC-Gruppen kommen alle aus etwa der gleichen Richtung, was darauf schließen lässt, dass die Funkwellen an einem relativ großen Objekt (großes Gebäude, Berg, Baum, etc.) reflektiert werden, welches sowohl zur BS als auch zur MS Line-of-Sight (LOS) hat. Sie werden im Modell in Form von Clustern repräsentiert und die Reflexionspunkte werden als Scatterer bezeichnet (siehe Fig. 11). Cluster sind also Gebiete, in denen eine bestimmte Anzahl von Scatterern positioniert ist. Die minimale Anzahl der Cluster ist immer 1, da der Near Cluster in jedem Fall existiert (NCl, min=1 ). In mehreren Messungen wurde festgestellt, dass Far Cluster in der GTU- und der GRA-Umgebung sehr selten sind. Darum wurden für diese REs in COST207 keine Far Cluster vorgeschlagen. Für die Umgebungen GBU und GHT existiert im Mittel ein Far Cluster, jedoch wurden auch schon fünf und mehr solcher Cluster in Messungen registriert. Um daher im Modell eine bessere Übereinstimmung mit der Realität zu bekommen, wird die Anzahl der Cluster stochastisch modelliert, sodass mitunter auch mehrere Cluster auftreten können und deren Anzahl sich bei der Fortbewegung der MS verändern kann.

Ein allgemeines Modell zur Beschreibung unregelmäßig auftretender Ereignisse ist der Poisson point process PPP(m). Kalkuliert man eine minimale Anzahl fixer Cluster NCl,min ein, so ergibt sich die Gesamtzahl der Cluster mit

$$N_{Cl} = N_{Cl,\min} + PPP(m). \qquad (1)$$

Die Parameter NCl,min und m sind globale Parameter. Mit PPP(m) wird die Anzahl zusätzlicher Cluster (Far Cluster) errechnet. Der Poisson-Point-Process erzeugt aus einer Gleichverteilung eine Poisson-Verteilung

$$P(x) = \frac{\lambda^{x} \cdot e^{-\lambda}}{x!}, \qquad (2)$$

indem er jenes minimale y sucht, für das die Bedingung

$$P(0) + P(1) + ... + P(y) \geq U(0,1) \qquad (3)$$

erfüllt ist. Dieses y ist das Ergebnis von PPP(m). U(0,1 ) ist eine Zufallszahl aus einer Gleichverteilung zwischen 0 und 1.

Die Wahrscheinlichkeit des Auftretens von Clustern ist gleich groß an jedem Punkt innerhalb eines bestimmten Bereichs um die BS. Im Modell werden sie daher mit einer Gleichverteilung in diesem Bereich ausgestreut. Die Position eines Clusters wird über dessen Mittelpunkt

$$\vec{x}_{Cl,i} = \begin{pmatrix} x_{Cl,i} \\ y_{Cl,i} \\ z_{Cl,i} \end{pmatrix} \qquad (4)$$

bestimmt, der den maximalen Abstand dmax zur BS nicht überschreiten darf. Die Lage der Far Cluster kann sich nicht verändern, weil sie fest stehende Objekte in der Landschaft repräsentieren. Der Near Cluster (i=1) stellt hingegen das Umfeld der MS dar, daher ist

$$\vec{x}_{Cl,1} \equiv \vec{x}_{MS} . \qquad (5)$$

Die Lage eines k-ten Scatterers im Cluster i wird mit seinen kartesischen Koordinaten

$$\vec{x}_{Si,j} = \begin{pmatrix} x_{Si,k} \\ y_{Si\,k} \\ z_{Si,k} \end{pmatrix} \tag{6}$$

dargestellt und seine Position mit Abstand, Azimut und Elevation zur BS

$$d_{Si,k} = \left| \vec{x}_{Si,k} \right| \qquad \varphi_{Si,k} = \arctan\left( \frac{y_{Si,k}}{x_{Si,k}} \right) \qquad \vartheta_{Si,k} = \arctan\left( \frac{z_{Si,k}}{\sqrt{x_{Si,k}^2 + y_{Si,k}^2}} \right) \tag{7}$$

errechnet. Bei einem Clusterradius RCl kann ein Scatterer maximal RCl+dCl,i von der BS entfernt sein. Da nun die Lage eines Scatterers genau bestimmbar ist, kann die Signallaufzeit TSi,j über diesen Pfad exakt errechnet werden. c ist die Lichtgeschwindigkeit.

$$\tau_{Si,k} = \frac{\left| \vec{x}_{Si,k} \right| + \left| \vec{x}_{Si,k} - \vec{x}_{MS} \right|}{c} \tag{8}$$

In Folge steht zur Vereinfachung der Schreibweise als Index von scatterer-bezogenen Parametern nur mehr der Buchstabe "s" (z.B. $T_S$).

Die Gruppenbildung von MPCs konnte mit Hilfe der Messung des Azimuth-Delay-Power-Spectrum (ADPS) festgestellt werden. Dieses zeigt, mit welcher Leistung und zeitlichen Verzögerung die einzelnen MPCs aus welcher Azimut-Richtung eintreffen, wie in Fig. 12 dargestellt.

Als Untergruppe zum ADPS gibt es auch das Power-Delay-Profile (PDP) und das Azimut-Power-Spectrum (APS). Das PDP zeigt, mit welcher Leistung und zeitlichen Verzögerung die MPCs den Empfänger erreichen. Das APS zeigt hingegen, aus welcher Azimut-Richtung die einzelnen Leistungsspektren eintreffen (Fig. 13). Der Winkel 0° entspricht hier der LOS-Richtung zum Sender oder zum Cluster. Analog dazu gibt es das Elevation-Power-Spectrum (EPS).

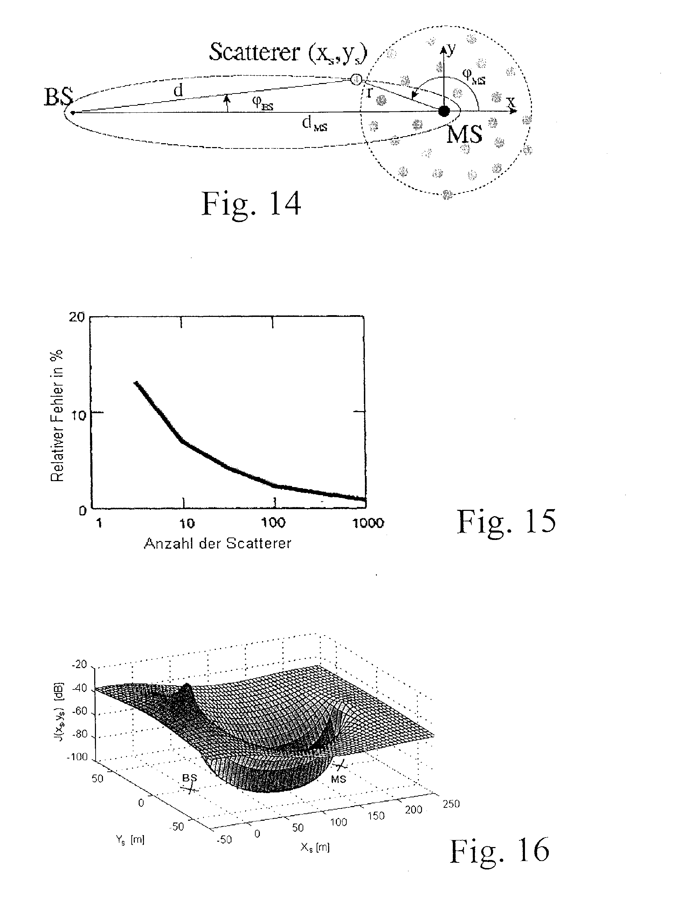

Aus der Information über Azimut und Verzögerung kann auch die geographische Position eines Scatterers ermittelt werden. Ist die Signallaufzeit einer MPC bekannt, so kann der Scatterer nur auf einer Ellipse um BS und MS liegen, wie in Fig. 14 dargestellt. Die tatsächliche Lage befindet sich dort, wo eine Gerade im Azimut-Winkel φ die Ellipse schneidet.

Das GSCM sieht eine Gewichtung der Scatterer vor, die deren "Flächen" entsprechen soll. Diese Gewichtung ist abhängig von der MS-Position und kann sich somit durch die Fortbewegung der MS zeitlich verändern. Ein Teil dieser Gewichtung wird durch die ADPS-Funktion Ps($\Delta_T$,$\Delta$φ,$\Delta\vartheta$) gegeben, die die Dämpfung der Scatterer abhängig von ihrer Position im Cluster bestimmt. Durch diesen Zusammenhang wird ein Cluster charakterisiert. Seine Eigenschaften hängen somit von seiner Position, den Spreads (CDS, CAS, CES), der Leistung und der Form ab. Die ADPS-Formel wird in Makrozellen für jeden einzelnen Cluster angewandt und bildet die am Empfänger typische exponentiell abfallende Form im PDP und die Laplace'sche Form des APS und EPS realer Messwerte gemittelt nach.

$$P_s\left(\Delta\tau, \Delta\varphi, \Delta\vartheta\right) = \frac{1}{1 - e^{-\frac{\sqrt{2}\cdot\pi}{S_\varphi}}} \cdot \frac{1}{1 - e^{-\frac{\sqrt{2}\cdot\pi}{S_\vartheta}}} \cdot \frac{1}{\sqrt{2}S_\tau S_\varphi S_\vartheta} \cdot e^{-\frac{\Delta\tau}{S_\tau}} \cdot e^{-\sqrt{2}\left|\frac{\Delta\varphi}{S_\varphi}\right|} \cdot e^{-\sqrt{2}\left|\frac{\Delta\vartheta}{S_\vartheta}\right|} \tag{9}$$

Dazu gibt es auch die vereinfachte Version, die die Elevation nicht beinhaltet:

$$P_s(\Delta\tau, \Delta\varphi) = \frac{1}{1 - e^{-\frac{\sqrt{2}\cdot\pi}{S_\varphi}}} \cdot \frac{1}{\sqrt{2}S_\varphi S_\tau} \cdot e^{-\frac{\Delta\tau}{S_\tau}} \cdot e^{-\sqrt{2}\left|\frac{\Delta\varphi}{S_\varphi}\right|} \qquad (10)$$

Die Funktion bewirkt, dass MPCs mit einer größeren Laufzeit und von der LOS-Richtung weiter abweichende Pfade stärker gedämpft werden. Sie wurde aus den Ergebnissen vieler Messkampagnen entwickelt. Mit $\Delta\varphi$ wird der Azimut-Winkel zwischen der LOS-Komponente und der MPC aus der Sicht des Empfängers angegeben. Als Verzögerung $\Delta_T$ ist der Laufzeitunterschied zwischen LOS-Pfad und dem vollständigen Scatterer-Pfad (Sender-Scatterer-Empfänger) einzusetzen - dies zumindest ergab sich aus der Analyse des Simulators. Beim LOS-Pfad handelt es sich im Falle eines Far Clusters um die Strecke BS-Far-Cluster-Zentrum-MS. Durch diese Festlegung kann es passieren, dass einige MPCs ein negatives T aufweisen. Da die Formel nur für positive Verzögerungen ausgelegt ist, muss die Amplitude der entsprechenden Scatterer auf Null gesetzt werden.

Anzahl der Scatterer

In COST259 gibt es keine allgemeingültige Aussage über die Anzahl der zu verwendenden Scatterer. Die notwendige Anzahl der Scatterer NS für eine bestimmte Simulation hängt von der System-Bandbreite und der Richtcharakteristik der Antenne ab. Für Trägerfrequenzen zwischen 500MHz und 3GHz wurde eine Anzahl von 20 MPCs bei Makrozellen-Messungen in Turin (in der San Francisco Bucht) wahrgenommen. Die Auflösung zur Aufzeichnung der Verzögerungen lag bei dieser Untersuchung bei 100ns. Durch Anwendung höherer Auflösungen und besserer Antennenarrays sollten viel mehr MPCs identifiziert werden können.
Für eine Simulation ist es oft notwendig, die Zahl der Scatterer pro Cluster genügend groß anzusetzen, damit jeder Cluster auch sicher Small-Scale-Fading verursachen kann. Für die ausreichende Modellierung dieses Fadings wird ein Minimum von sieben Scatterern vorgeschlagen. Um jedoch eine höhere Auflösung in Verzögerung und Azimut zu erreichen, empfiehlt COST259 eine noch größere Anzahl an MPCs pro Cluster. Je mehr Scatterer das Modell zur Simulation verwendet, desto exakter kann das Small-Scale-Fading nachgebildet werden. Der Zusammenhang zwischen der Anzahl der Scatterer und dem relativen Fehler ist in dem Diagramm von Fig. 15 dargestellt.

Clusterformung und Scattererverteilung

Zur Verteilung der Scatterer muss zunächst Form und Größe des Clusters bekannt sein. Da dazu in COST259 keine exakten Aussagen vorkommen, ergeben sich die Erklärungen in diesem Kapitel aus der GSCM-Analyse und damit einhergehenden Interpretationen.
Normalerweise wird ein Cluster als Zylinder dargestellt, da jedoch im GSCM keine Elevation vorgesehen ist, kann ein Cluster zweidimensional als Kreis in der Grundfläche behandelt werden. Das APS zeigt die Leistung der MPCs in Abhängigkeit von ihren Azimutwinkeln an. Dabei ist zu beobachten, dass der größte Teil der Leistung eines Clusters in einem relativ kleinen Winkel eintrifft. Würde man aus Sicht des Empfängers alle MPCs im Winkelbereich zwischen -π und +π berücksichtigen, müsste der Cluster unendlich groß sein. Genauso kann es durch die exponentielle Form des PDP vorkommen, dass nach unendlich langer Zeit eine sehr schwache Leistungskomponente am Empfänger eintrifft, was ebenfalls durch einen unendlich großen Clusterradius hervorgerufen wird.
Um diesen aber auf einen realistischen Wert festzusetzen, begnügt man sich mit einem willkürlichen, aber großen Prozentsatz der MPC-Gesamtleistung eines Clusters (beispielsweise 99%) und vernachlässigt MPCs mit zu großem Azimut oder mit zu großer Verzögerung zum Pfad über die Clustermitte. Dadurch entstehen Grenzen, die den Cluster bilden. Da die Bestimmung des korrekten Radius über einen ausgewählten Prozentsatz jedoch relativ rechenintensiv wäre, bedient man sich eines einfachen Modells. Der Clusterradius wird von Delay und Azimut Spread abhängig gemacht, die ein Maß für die Streuung der Verzögerungen und des Azimuts darstellen und hauptsächlich als Eingangswerte für die Berechnung von PDP und APS verwendet werden. Der Radius in Abhängigkeit der Distanz des Clusters zur BS wird durch den CAS mit

$$R_{AS} = |\vec{x}_{Cl,i}| \cdot \sin(S_{\varphi,i}) \qquad (11)$$

errechnet. Der Clusterradius aufgrund des CDS ergibt sich mit

$$R_{\tau,i} = c \cdot S_{\tau,i} \cdot 3 \tag{12}$$

Da der Cluster kreisförmig angenommen wird, wird der größere der beiden Radien als Clusterradius $R_{Cl}$ verwendet.

Die Verteilung der Scatterer im Cluster wird stochastisch ermittelt und hat einen großen Einfluss auf das Aussehen des ADPS. Formel (9) bzw (10) entstammen aus COST259 und wurden für eine Gleichverteilung der Scatterer ausgelegt. Nur auf diese Art bekommen das PDP und das APS ihre charakteristischen Formen. Wäre die Auftrittswahrscheinlichkeit PDF und somit die Dichte der Scatterer in Nähe des Clusterzentrums unterschiedlich zur Dichte am Clusterrand, so würde die Summe aller MPCs das resultierende ADPS verzerren. Die Gleichverteilung der Scatterer erfolgt mit

$$r_s = R_{Cl} \cdot \sqrt{U(0,1)}, \tag{13}$$

wobei $r_s$ der Abstand des Scatterers vom Clusterzentrum und $U(0,1)$ eine Gleichverteilung zwischen 0 und 1 ist. Die zugehörigen Azimut-Winkel unterliegen einer Gleichverteilung zwischen $0°$ und $360°$.

Jacobian-Transformation

Bei der Anordnung der Streuer wurde eine Gleichverteilung der Streuer innerhalb eines Clusters angenommen. Aus der ADPS ist allerdings ersichtlich, dass diese Gleichverteilung nur eine Näherung ist. Nun ist es erforderlich, diese Ungenauigkeit zu kompensieren. Dies erfolgt über die Jacobian-Transformation.

Der Zusammenhang zwischen Scatterer-Position in der Funkzelle und seiner Dämpfung wird über die Jacobian-Transformation $J(x_s,y_s)$ beschrieben. Dieses stochastische Modell im GSCM versucht, die Auftrittswahrscheinlichkeit (PDF) eines Scatterers abhängig von seinem "Standort" zu transformieren und daraus einen Dämpfungswert für ihn zu bestimmen. $J(x_s,y_s)$ ist genau genommen allerdings kein Dämpfungs-, sondern ein Verstärkungsfaktor, der für alle Scattererpositionen Werte kleiner 0 dB annimmt.

$$J(x_s,y_s) = \frac{(Bx_s d_{MS} + x_s^2 B + C d_{MS}^2 + 2C x_s d_{MS} + C x_s^2 + B y_s^2 + C y_s^2)}{B^3 C}, \text{ wobei} \tag{14}$$

$$B = \sqrt{d_{MS}^2 + 2x_s d_{MS} + x_s^2 + y_s^2} \tag{15}$$

und

$$C = \sqrt{X_s^2 + y_s^2} \tag{16}$$

Liegt ein Scatterer im Bereich der LOS zwischen BS und MS, so weist dieser eine wesentlich stärkere Dämpfung auf als welche, die sich außerhalb dieses Pfades befinden. Dadurch bildet sich eine Art "Badewanne", wie im Diagramm von Fig. 16 dargestellt. Dieser Umstand wurde durch ADPS-Messungen herausgefunden und in das das COST259-Modell abbildende GSCM aufgenommen.

Shadowing

Einen wichtigen Faktor für die Eigenschaften des Mobilfunkkanals stellt das *Shadowing* (Abschatten) dar. Dieser Effekt tritt auf, wenn durch ein Objekt in der Landschaft der direkte Ausbreitungspfad zwischen BS und MS unterbrochen ist (NLOS). Als Sender sind dabei die BS oder die MS zu sehen, jedoch wirken auch alle Scatterer als solche. Bei der Bewegung der MS durch die Funkzelle tritt in der Realität immer wieder dieser NLOS-Fall auf, sodass die "Sichtbarkeit" der BS oder eines Far Clusters unterbrochen ist. Einzig der Near Cluster ist ständig sichtbar, da er die unmittelbare Umgebung der MS repräsentiert.

Das Erscheinen und Verschwinden von Sendern wird mit dem Konzept der *Visibility Regions* VR modelliert. Dieses sieht die Generierung von kreisförmigen Gebieten vor, deren Mittelpunkt in einem maximalen Abstand zur BS $d_{co}$ *(cut-off distance)* liegt. Wenn sich die MS in einer solchen Region aufhält, kann sie abhängig vom Typ der VR einen Cluster oder die BS "sehen". Außerhalb dieses Gebiets kann der entsprechende Sender nicht gesehen werden. Somit wird zwischen *LOS-Visibility Region* und *Cluster Visibility Region* unterschieden, wobei erstere nur die LOS zur BS bestimmen und die Cluster-VR die Sichtbarkeit aller MPCs in einem bestimmten Far Cluster festlegt. Wichtig ist, dass für jeden Far Cluster eigene Cluster-VRs angelegt werden müssen. Dieses Modell ist in COST259 allerdings nur sehr vage beschrieben, weshalb sich die folgenden Ausführungen großteils aus der Analyse des bestehenden Kanalmodells ableiten.

Die Verteilungsdichte eines VR-Typs $\rho_c$ leitet sich aus der statistischen Auftritts-Wahrscheinlichkeit ab und wird mit

$$\rho_c = \frac{m}{r_c^2 \pi} \tag{17}$$

berechnet, wobei für $m$ die mittlere Anzahl zusätzlicher Cluster und für $r_c$ der Radius des entsprechenden VR-Typs einzusetzen ist. Die Cluster-VRs werden auf der Fläche innerhalb der Cut-off-Distanz $d_{co}$ gleichverteilt. Ihre Anzahl $N_{VR,Cl,i}$ wird so, bestimmt, dass das Verhältnis der Fläche aller VRs zur Gesamtfläche innerhalb der Cut-off-Distanz der Wahrscheinlichkeit von Cluster-Visibility entspricht. Das Ergebnis muss auf den nächstgelegenen ganzzahligen Wert auf- oder abgerundet werden. Das Vorhandensein von Sichtbarkeit ist durch $V_{Cl}$ gegeben.

$$N_{VR,Cl,i} = \left(\frac{d_{co}}{r_{c,SF}}\right)^2 \cdot \frac{m}{N_{Cl}} \tag{18}$$

$$V_{Cl} = \begin{cases} 1 & , \text{bei } \left|\vec{x}_{MS} - \vec{x}_{VR}\right| \le r_{c,SF} \\ 0 & , \text{sonst} \end{cases} \tag{19}$$

Die Anzahl der LOS-VRs wird bestimmt mit

$$N_{VR,LOS} = \frac{h_{BS} - h_{roof}}{h_{BS}} \cdot 0{,}5 \cdot \left(\frac{d_{co}}{r_{c,LOS}}\right)^2 , \tag{20}$$

wobei auch dieses Ergebnis auf den nächstgelegenen ganzzahligen Wert auf- oder abgerundet werden muss. Sie werden in Abstand zur BS und in Azimut gleichverteilt, woraus eine Abnahme der Verteilungsdichte in Richtung Zellgrenze resultiert. Dies erscheint auch logisch, denn je weiter sich die MS von der BS entfernt, desto größer ist die Wahrscheinlichkeit, dass Objekte in der Landschaft die direkte Sichtverbindung verdecken.

Mit dem Ausdruck *Large-Scale-Fading* werden Veränderungen der gemittelten Leistung des empfangenen Signals beschrieben, wenn ein zeit- oder raumveränderlicher Mehrwegekanal als Übertragungsmedium verwendet wird. Normalerweise bleiben diese Mittelwerte für kurze Zeit- oder Raumabstände annähernd konstant. Die Hauptursache für das Auftreten von Large-Scale-Fading liegt in der Veränderung der Kanaleigenschaften, die entstehen, wenn sich die MS in eine oder aus einer VR bewegt. Dieser kausale Zusammenhang hat zu dem Begriff *Shadow Fading* geführt, der des Öfteren auch anstelle Large-Scale-Fading verwendet wird. Bei der Durchführung zahlreicher Messungen hat sich ergeben, dass die mittlere Leistung bei einer Bewegung über eine Distanz von über zehn Wellenlängen des Sendesignals ungefähr konstant bleibt. In der Simulation müssen die entsprechenden Parameter erst nach Zurücklegen dieser Distanz aktualisiert werden.

Small Scale Fading

Der Ausdruck *Small-Scale Fading* beschreibt die raschen Amplitudenänderungen eines von einem zeit- oder raumveränderlichen Mehrwegekanal empfangenen Signals. Diese schnellen Veränderungen können schon bei MS-Bewegungen in der Größenordnung einer Wellenlänge $\lambda$ auftreten. Sie werden durch konstruktive oder destruktive Überlagerung der zeitverzögerten und mit unterschiedlichen Phasenlagen eintreffenden MPCs verursacht. Small-Scale-Fading wird oft auch als *Fast Fading* oder *Short-Term Fading* bezeichnet. Die Untersuchungen des Small-Scale-Fading basieren meistens auf Messkampagnen, viele Studien der vergangenen Jahre erhielten ihre Ergebnisse auch durch Simulationen zur deterministischen Ausbreitungs-Vorhersage. Das weitest verbreitete Modell für Small-Scale Fading ist die Annahme einer Rayleigh-Fading-Amplitude. Die Rayleigh-Verteilung

$$f_a(a) = \begin{cases} \dfrac{a}{\sigma^2} \cdot e^{-\frac{a^2}{2\sigma^2}} & , a \geq 0 \\ 0 & , a < 0 \end{cases} \qquad (21)$$

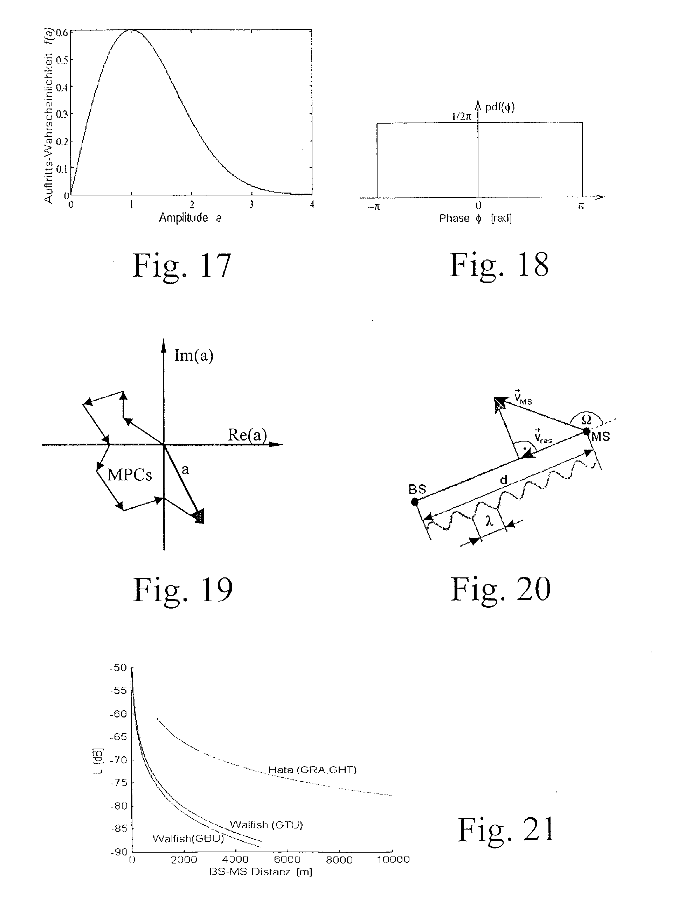

entsteht bei einer Amplitudenverteilung einer Summe a einer großen Anzahl von unkorrelierten rotierenden Vektoren mit gleicher Amplitude und gleichverteilter Phase. Fig. 17 und Fig. 18 zeigen für den Rayleigh-Prozess die Wahrscheinlichkeitsdichteverteilung *(Probability Density Function PDF)* für Amplitude und Phase. Diese zeigt, mit welcher Wahrscheinlichkeit eine bestimmte Amplitude a (bzw. Phase $\phi$) auftreten kann.

Nimmt man nun an, dass das empfangene Signal *a(t)* aus der Überlagerung einer Vielzahl unkorrelierter MPCs (mit ungefähr den gleichen Amplituden) besteht, lässt sich die Auftrittswahrscheinlichkeit der zeitabhängigen Amplitude |a (t)| als Rayleigh-Verteilung beschreiben. Die Phase des resultierenden Vektors $\phi(a(t))$ wird im Intervall [-$\pi$, $\pi$] gleichverteilt. Die Varianz des Fadingprozesses $2\sigma^2$ entspricht der Signalleistung und kann daher aus dem Ergebnis des Large-Scale-Fading-Modells bestimmt werden. Die Rayleigh-Verteilung kann in unkorrelierte Gauß-Verteilungen (Mittelwert 0) für den Real- und den Imaginärteil des Vektors a zerlegt werden, das ist vorteilhaft für Simulationszwecke (siehe Fig. 19).

Für den Fall, dass eine der MPCs die LOS-Komponente zwischen BS und MS darstellt, modelliert man die Fadingamplitude durch die Rice-Verteilung

$$f_a(a) = \frac{a}{\sigma^2} \cdot I_0\left(\frac{a \cdot \rho}{\sigma^2}\right) \cdot e^{-\frac{a^2+\rho^2}{2\sigma^2}} \qquad , \text{für } a \geq 0 . \qquad (22)$$

Diese Verteilung beschreibt die Amplitudenverteilung des resultierenden Vektors a, der aus der Summe aus einem dominanten Vektor und einer Vielzahl viel kleinerer unkorrelierter Vektoren mit gleicher Amplitude und gleichverteilter Phase besteht. Das *Rice'sche Fading* kann daher als Überlagerung einer dominanten Komponente (BS-MS-LOS) mit einem Rayleigh-Fading-Signal interpretiert werden. Der Parameter $I_0$(x) in Formel (22) ist die modifizierte Bessel-Funktion 0-ter Ordnung

$$I_0(x) = \frac{1}{2\pi} \int_0^{2\pi} e^{x \cos\phi} d\phi . \qquad (23)$$

Der Parameter $\rho^2$ beschreibt die Leistung der Rayleigh-verteilten Komponente. Wenn keine dominante Komponente vorliegt (NLOS; d.h. $\rho^2$=0), verwandelt sich die Rice-Verteilung infolge in eine Rayleigh-Verteilung. Das Verhältnis zwischen der Leistung der LOS-Komponente und der Leistung der Rayleigh-Komponente wird als *Rice'scher K-Faktor* $K=\rho^2/(2\sigma^2)$ bezeichnet, welcher somit die Abweichung vom Rayleigh-Fading präzise beschreibt und ein Maß für die Stärke der LOS ist.

Phasenverschiebung durch den HF-Träger

Um den Kanal mit möglichst niedrigen Frequenzen berechnen zu können, wird als Modulatorsignal bloß das entsprechende Basisbandsignal verwendet. Damit dennoch die Einflüsse durch die schnell veränderlichen Phasenlage des Modulatorsignals im Ausgangssignal sichtbar wird und die Small-Scale-Fading-Einbrüche entstehen können, wird das Gewicht eines jeden Pfades mit einer zusätzlich Phasendrehung $\phi$ versehen, welche von der richtigen Trägerfrequenz $f_c$ des Modulators abhängt. Außerdem wird die Länge des gesamten MPC-Pfades d zwischen BS (, Scatterer) und MS berücksichtigt (Fig. 20). Diese Berechnungsmethode kann jedoch nur bei schmalbandigen Mobilfunksystemen angewandt werden.

$$\phi(d) = 2\pi f_c \frac{d}{c} = 2\pi \frac{d}{\lambda} \qquad (24)$$

Doppler-Effekt

Durch die relative Bewegung der MS zum Sender erfährt eine MPC eine Frequenzverschiebung. Eine Welle breitet sich in Luft mit der Lichtgeschwindigkeit c aus.

Bewegt sich (im Downlink) die MS mit einer Geschwindigkeit $V_{res}$ auf die BS zu, so "sieht" sie die Ausbreitungsgeschwindigkeit als Summe $V_{res}+c$ und eine Wellenlänge $\lambda$ wird entsprechend schneller durchlaufen. Somit erscheint die Welle an der bewegten MS nicht mit der Sendefrequenz $f_c$ , sondern verschoben um die Dopplerfrequenz $f_D$.

$$f_D = f_c \cdot \frac{\vec{v}_{MS} \cdot \cos \Omega}{c}. \tag{25}$$

Sie ist abhängig von der Relativgeschwindigkeit $v$, der Lichtgeschwindigkeit $c$ sowie $\Omega$, dem Winkel zwischen dem Bewegungsvektor und dem Ausbreitungsvektor. Selbiges Prinzip gilt analog dazu auch im Uplink. Wenn die MS sich vom Sender wegbewegt, dann wird $f_D$ negativ. Als Sender wird nicht nur die BS gesehen, sondern auch die einzelnen Scatterer wirken als solche.

Übereinstimmung mit Messungen

Die Leistungsverluste einer Funkübertragungsstrecke im freien Raum werden durch die *Pfaddämpfung* (Pathloss) beschrieben. Diese wird mit dem COST-Hata-Modell (für GRA und GHT) bzw. mit dem COST-Walfish-Ikegami-Modell (für GTU und GBU) errechnet. Beide Methoden ergeben die durchschnittliche Dämpfung zwischen Sende- und Empfangssignal abhängig von der BS-MS-Distanz, wie im Diagramm von Fig. 21 dargestellt. Sie wurden erstmals in COST231 beschrieben und für die Anwendung in COST259 geringfügig angepasst. Es ist zu beachten, dass diese Modelle nur für Schmalband-Kanalsimulatoren gültig sind.

Es stellte sich heraus, dass die errechneten Gewichtsfaktoren einen mittleren Dämpfungsverlauf ergeben, der mit den gemessenen Werten nach COST Hata und COST Walfish-Ikegami nicht genau übereinstimmt. Diese Ungenauigkeit ist u. a. auf die Einschränkung des Kanalmodells auf single bounced MPCs (einfache Reflexionen) und auf die Beschränkung der Anzahl der MPCs zurückzuführen. Es muss daher eine Anpassung der Formeln an die gemessenen Werte vorgenommen werden.

Um dies zu erreichen, wird vor der eigentlichen Kanalsimulation die Monte-Carlo-Simulation durchgeführt. Dabei wird für LOS, Near-Cluster und Far-Cluster je eine Tabelle mit Korrekturwerten errechnet. Ein solcher Wert zeigt die korrigierte Pfaddämpfung $L_{MC}(d_{MS})$ einer MPC in Abhängigkeit von der BS-MS-Distanz. Er dient zur Regelung der Dämpfung einer einzelnen MPC und hilft, die Gesamtdämpfung des Kanals in der späteren Simulation an die Kurven von COST Hata bzw. COST Walfish-Ikegami anzupassen. Die Simulation muss für jedes der vier RE eigens durchgeführt werden, und auch die Fälle Uplink und Downlink benötigen verschiedene Korrekturwerttabellen. Die folgende Ablauf-Beschreibung entstammt der Analyse des bestehenden Kanalmodells.

Nach Festlegung des RE wird in einem nach den beschriebenen COST-Spielregeln ausgewürfelten Kanal der Radius zwischen Zellmitte und äußerer Grenze in 128 gleich große Schritte unterteilt. Diese Schrittanzahl ergibt später auch die Anzahl der Einträge pro Tabelle. Für die Anzahl der Schritte könnte aber jeder beliebige ganzzahlige Wert verwendet werden. Weil sich die MS im Bereich zwischen Zellmitte und innerer Grenze nicht aufhalten darf, werden die zugehörigen Korrekturwerte einer Tabelle Null gesetzt.

Nun wird die MS mit $\varphi_{MS}=45°$ auf die innere Grenze gesetzt und es beginnt der erste Simulationsdurchlauf, indem jeder MPC eine von der Pfaddämpfung abhängige Dämpfung

$$L_{MC}(d_{MS}) = \frac{L(d_{MS})}{5{,}333} \tag{26}$$

zugewiesen wird. Durch die Simulation des Kanals für den Zeitpunkt $t=0$ kann die Gesamtleistung des Empfangssignals bzw. die Dämpfung des Kanals für diese MS-Position berechnet werden (Kapitel 0). Sie stimmt durch den sehr fiktiv angenommenen $L_{MC}$-Wert nicht mit der geforderten COST-Pfaddämpfung überein. Deshalb werden aus $L_{MC}$ über das Verhältnis zwischen ermittelter Dämpfung der Cluster $(L_{LOS,}\ L_{NS,}\ L_{FS})$ und COST-Pfaddämpfung $L$ drei Korrekturwerte

$$L_{corr,LOS} = L_{MC} \cdot \frac{L_{LOS}}{L} \cdot (1 + K_0), \tag{27}$$

$$L_{corr,NS} = L_{MC} \cdot \frac{L_{NS} + L_{FS}}{L} \cdot \frac{1 + K_0}{K_0} \, , \tag{28}$$

$$L_{corr,FS} = L_{MC} \cdot \frac{L_{NS} + L_{FS}}{L} \cdot \frac{1 + K_0}{K_0} \tag{29}$$

bestimmt. Auch der Rice-Faktor $K_0$ fließt in die Berechnung mit ein.

Der erste Durchlauf ist somit beendet. Es werden anschließend 500 dieser Durchläufe bei unveränderter MS-Position wiederholt, wobei jedoch die Ausführung der "Landschaft" (Anzahl, Positionen und Größen von Clustern, Scatterern und Visibility Regions) jedes Mal neu ausgewürfelt wird. Somit ergeben sich 500 verschiedene $L_{corr,xxx}$-Werte, deren Mittelwert den richtigen Korrekturfaktor $L_{MC}(d_{MS})$ ergibt.

Zum Korrekturwert $L_{MC}$ aus der Monte-Carlo-Simulation wird für jeden Far Cluster eine zusätzliche Pfaddämpfung $L_{add}$ (auch dieser Faktor ist mathematisch eine Verstärkung) addiert.

$$L_{Cl,i} = L_{MC} + L_{add} \; [\text{dB}] \tag{30}$$

$$L_{add} = U(0,20) + \frac{\tau_{Cl,i} - \tau 0}{\mu s} [\text{dB}] \, , \tag{31}$$

wobei $\tau_0$ die Laufzeit der BS-MS-LOS-Komponente und $U(a,b)$ eine Gleichverteilung zwischen $a$ und $b$ kennzeichnet. Diese Formeln schließen mit ein, dass bei Far Clustern eine größere Ausbreitungs-Verzögerung und eine stärkere Dämpfung vorkommen, welches durch Messungen auch bestätigt wurde.

Kanal-Ausgangssignal

Aufgrund der bisherigen Ausführungen ergeben sich nun für die Gewichtsfaktoren folgende Gleichungen:

$$a_{LOS}(t,\tau,\varphi) = A_{BSA}(\varphi_{MS}) \cdot A_{MSA}(\varphi_{MS,BS}) \cdot 10^{\frac{1}{20}L_{MC,0}} \cdot S_{sf,1} \cdot 10^{\frac{1}{20}K_0} \cdot e^{j\phi} \tag{32}$$

$$a_{FS}(t,\tau,\varphi) = V_{Cl} \cdot A_{BSA}(\varphi_{FS}) \cdot A_{MSA}(\varphi_{MS,FS}) \cdot P_s(\Delta\tau,\Delta\varphi) \cdot J(x_s,y_s) \cdot 10^{\frac{1}{20}(L_{MC,i}+L_{add})} \cdot S_{sf,i} \cdot e^{j\phi} \tag{33}$$

A        Antennengewinn
$L_{MC}$      Korrfakt. Aus MC-Simulation
$K_0$        Rice-faktor
$S_{sf}$        Shadowing-Fading-Faktor
Phi        Phasenkorrektur zur Trägerberücksichtigung
$P_s$        APDS
J        Jacobian Transformation (Korrektur zischen gleichverteilter Streuer und APDS)
$V_{Cl}$        Visibility Region d. Clusters

Laut COST259 wird beim APS zwischen Uplink und Downlink unterschieden, daher werden für diese beiden Fälle verschiedene Pfadgewichtsberechnungen im Kanalmodell benutzt.

$$a_{NS,Uplink}(t,\tau,\varphi) = A_{BSA}(\varphi_{NS}) \cdot A_{MSA}(\varphi_{MS,NS}) \cdot P_s(\Delta\tau,\Delta\varphi) \cdot J(x_s,y_s) \cdot 10^{\frac{1}{20}L_{MC,1}} \cdot S_{sf,1} \cdot e^{j\phi} \tag{34}$$

$$a_{NS,Downplink}(t,\tau,\varphi) = A_{BSA}(\varphi_{NS}) \cdot A_{MSA}(\varphi_{MS,NS}) \cdot 10^{\frac{1}{20}L_{MC,1}} \cdot S_{sf,1} \cdot e^{j\phi} \tag{35}$$

Die Pfadgewichte stellen den jeweiligen Anteil einer MPC an der Gesamtdämpfung des Kanals dar. Sie werden mit dem um die Signallaufzeit verzögerten Eingangssignal multipliziert, und die Summe aller Produkte addiert mit den beiden Rauschpegeln ergibt das Empfangssignal.

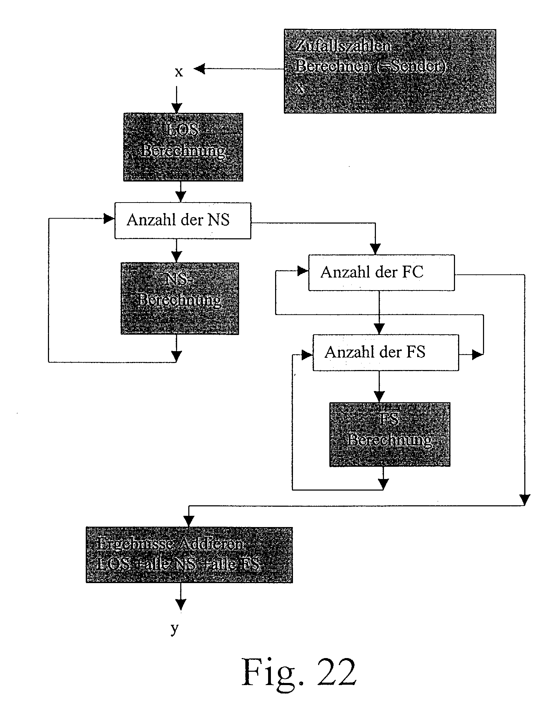

In Fig. 22 ist der grundlegende Aufbau des Simulationsalgorithmus für eine Antenne skizziert. Die Berechnung der Line-of-Sight-Komponente (LOS), der Near-Scatterer-Komponenten (NS) sowie der Far-Scatterer-Komponenten (FS) muss für jede zu simulierende Antenne getrennt erfolgen, weil jede Antenne durch die räumliche Distanz zueinander eine andere Kanalübertragungsfunktion besitzt.

Ablauf der Kanalsimulation

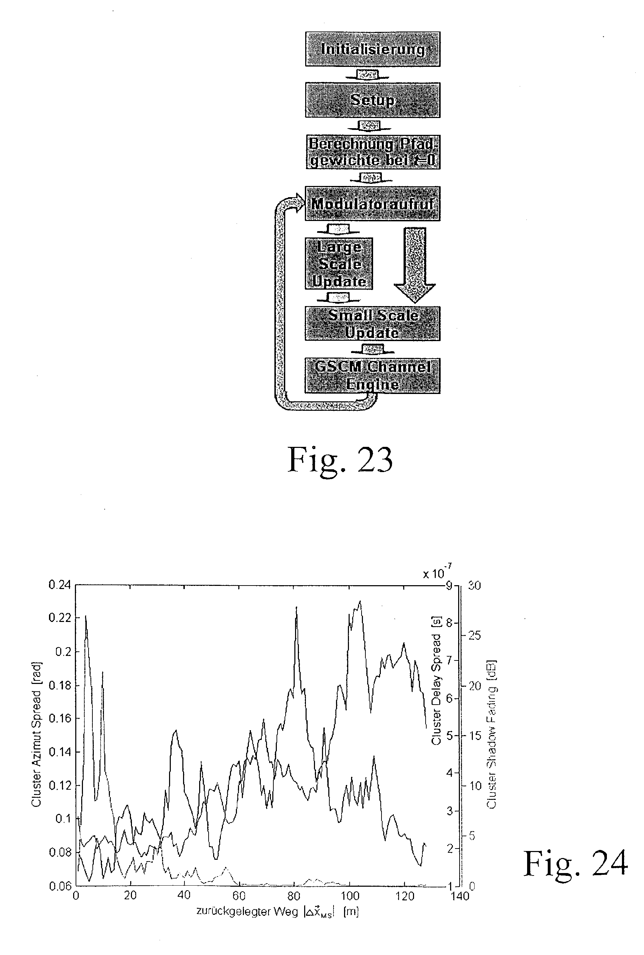

Im Folgenden wird der Ablauf der erfindungsgemäßen Kanalsimulation anhand des Flussdiagramms von Fig. 23 erläutert.

Das Programm beginnt abhängig vom Benutzerwunsch mit der Initialisierung der ausgewählten Funkzelle und des Modulators. Im Setup werden die geographischen Gegebenheiten des Kanals nach vorgegebenen Kriterien ausgewürfelt und alle Startwerte der veränderlichen Parameter berechnet. Somit können die Pfadgewichte für den Zeitpunkt $t$=0 bestimmt werden.

Im Anschluss daran tritt das Programm in eine Schleife ein, welche die Aufgabe hat, die Pfadgewichte und das Ausgangssignal des Kanals für den Zeitraum eines Zeitschlitzes zu berechnen. Zuerst wird der Modulator aufgerufen und erstellt das Eingangssignal. Danach folgt die Durchführung des Small-Scale-Update, dessen Aufgabe es ist, die für das Small-Scale-Fading zuständigen schnell veränderlichen Parameter zu aktualisieren und die Pfadgewichte für jeden Zeitpunkt im Abstand der Symboldauer T zu ermitteln. In Abhängigkeit davon wird zuletzt in der GSCM-Channel-Engine das Ausgangssignal bestimmt.

Immer, wenn die Schleife nun von neuem durchlaufen wird, muss geprüft werden, ob sich die MS schon weiter als die Distanz von 10 Wellenlängen bewegt hat. In diesem Fall wird nach dem Modulatoraufruf das Large-Scale-Update durchgeführt, um eine Aktualisierung der langsam veränderlichen Kanalparameter vorzunehmen.

Die Anzahl der Schleifendurchläufe wird durch den Benutzer bestimmt, indem er die Anzahl der zu simulierenden TDMA-Frames festlegt, wobei die Berechnung eines Frames acht Durchläufe benötigt. In den folgenden Absätzen ist eine genaue Beschreibung der einzelnen Ablaufschritte zu finden.

Initialisierung

- Die Initialisierung beginnt mit einigen Abfragen an den Benutzer. Er wird um die Eingabe des gewünschten REs und des Modulators gefragt, weiters hat er die Anzahl der zu simulierenden TDMA-Frames, welche der acht Zeitschlitze simuliert werden sollen und die Samplingrate anzugeben.
- Es folgt die Initialisierung der MS-Startposition und -Drehung, der Antennenmuster, der Anzahl der Far Cluster und der Störabstände von Rauschen und Interferenz.
- Für die eigentliche Kanalsimulation werden die Korrekturwerttabellen aus der Monte-Carlo-Simulation geladen. Wird diese selbst ausgeführt, geschieht an diesem Punkt nichts.
- Alle COST-Parameter aus den entsprechenden Tabellen werden bestimmt.
- Die MS-Geschwindigkeit in x- und y-Richtung wird durch den Benutzer festgesetzt.
- Die Parameter des gewählten Modulators werden initialisiert.

Setup: Berechnung der Startwerte

- Festlegen der Trägerfrequenz des Senders zur Berechnung der Wellenlänge $\lambda$
- Positionierung der Mobilstationen, Near- und Far Cluster
- Initialisierung der Shadowing- und Spread-Tabellen
- Interpolation des Shadowing-Wertes
- Interpolation von Cluster Azimut Spread und Cluster Delay Spread
- Interpolation der Korrekturwerte
- Erzeugen der Visibility Regions
- Prüfen, ob sich die MS in einer der VRs aufhält
- Ausstreuen der Scatterer
- Berechnung der Distanzen und Winkel aller MPCs in der Zelle

- Berechnung von Pfadgewichtskomponenten
- Bestimmung des richtungsabhängigen Antennengewinns

Berechnen der ersten Pfadgewichte

Nun können die Pfadgewichte für den Zeitpunkt *t*=0 mittels Small-Scale-Update ermittelt werden.

Compute Channel

Dieser Bereich der Simulation ist als Schleife realisiert, wobei ein Durchlauf das Ausgangsignal des Kanals für die Dauer eines Zeitschlitzes simulieren kann. Dazu werden die bereits berechneten Pfadgewichte für den aktuellen Zeitpunkt (Beginn des Zeitschlitzes) verwendet und die Pfadgewichte für den Zeitpunkt am Ende des Zeitschlitzes ermittelt. Fordert der Benutzer für den aktuellen Zeitschlitz die Ausgabe eines Ausgangssignals, so wird zwischen den zueinandergehörigen Pfadgewichten in einem Zeitraster der Größe der GSM/EDGE-Symboldauer *T* interpoliert. Durch Multiplikation des Eingangssignals mit den Pfadgewichten und die Summation der Produkte wird das Ausgangssignal für jeden dieser Zeitpunkte erzeugt. Da die Pfadgewichte am Ende des Zeitschlitzes gleich sind mit denen am Beginn des folgenden Zeitschlitzes, müssen auch in jedem weiteren Schleifendurchlauf von *Compute Channel* nur die Pfadgewichte am Zeitschlitzende bestimmt werden. Im Detail werden in einem Durchlauf die folgenden Schritte durchlaufen.

Modulatoraufruf

In diesem Abschnitt wird der gewünschte Modulator aufgerufen, um dessen Basisbandsignal mit zufällig gewählten Datenbits zu erstellen. Wurde jedoch kein Modulator ausgewählt, so wird das Eingangssignal konstant auf den Wert *x(t)*=1 gesetzt.

Large Scale Update

Das Large-Scale-Update *(LS-Update)* aktualisiert Werte, die Large-Scale-Fading verursachen und daher nur nach einem zurückgelegten MS-Weg von zehn Wellenlängen neu bestimmt werden müssen. Somit wird dieser Programmteil nicht in jedem Durchlauf von Compute Channel aufgerufen. Dieser Umstand bringt Vorteile in der Performance des Kanalsimulators, da sich die Aktualisierung vieler dieser Werte als sehr rechenintensiv darstellt.

- Neupositionierung von NC und NS
- Neubestimmung aller Distanzen und Winkel zwischen BS-NS
- Interpolation der Korrekturwerte
- Interpolation von Cluster Azimut Spread und Cluster Delay Spread
- Berechnung von Pfadgewichtskomponenten
- Prüfen, ob sich die MS in einer der VRs aufhält
- Bestimmung des richtungsabhängigen Antennengewinns

Small Scale Update

Im Small-Scale-Update werden die schnell veränderlichen Werte im Kanal berechnet und die Pfadgewichte aller MPCs bestimmt.

- Abhängig von der Geschwindigkeit in x- und y-Richtung wird die MS dort positioniert, wo sie sich am Ende des aktuellen Zeitschlitzes befinden wird.
- Daraus werden alle Distanzen und Winkel zwischen MS-NS, MS-FS bzw. MS-BS bestimmt.
- Die Signallaufzeit und die Phasenverschiebung jeder MPC werden über die Distanzen exakt berechnet.
- Interpolation des Shadowing-Wertes
- Abhängig von der LOS-Visibility wird der Rice-Faktor ermittelt.
- Aus allen ermittelten Werten werden für jede MPC die Pfadgewichte für den Zeitpunkt am Ende des Zeitschlitzes errechnet.
- Um nun eine ausreichende zeitliche Auflösung zu bekommen, wird zwischen den einzelnen Pfadgewichten am Beginn und am Ende des aktuellen Zeitschlitzes interpoliert. Dazu gibt es zwei einfache Methoden. Entweder es werden die Beträge und die Phasen oder die Real- und Imaginärteile getrennt voneinander linear interpoliert. Aus der optischen Betrachtung der Ausgangssignale wird erstere Methode eher bevorzugt. Die Interpolation erfolgt aber nur, wenn der Benutzer die Berechnung des Ausgangssignals für den jeweils aktuellen Zeitschlitz angefordert hat.

## GSCM Channel Engine

Die Aufgabe der Channel Engine besteht darin, die Laufzeiten der MPCs zu ermitteln und in Kombination mit den Pfadgewichten das Ausgangssignal zu errechnen. Dieser Programmteil wird nur aufgerufen, wenn der Benutzer die Berechnung des Ausgangssignals für den jeweils aktuellen Zeitschlitz angefordert hat.

- Aufgrund der Distanzen kann die Signallaufzeit einer MPC errechnet werden.
- Jedes Pfadgewicht wird mit der auf diese Weise zeitverzögerten Komponente des Kanal-Eingangssignals (Modulator-Basisbandsignal) multipliziert. Durch die phasenrichtige Addition dieser Produkte entsteht das Ausgangssignal in einem zeitlichen Raster der Symboldauer T.
- Zusätzlich werden zu der Summe SIR- und SNR-Rauschen addiert

Es folgt eine Beschreibung von Ablaufschritten, die weiter oben zwar angeführt, aber noch nicht näher erklärt wurden.

## Positionierung der Mobilstationen, Near- und Far Cluster

Die MS-Position wird in der Zelle entweder benutzerdefiniert oder zufällig gewählt, es sei denn, sie ist wegen der Monte-Carlo-Simulation bereits gegeben. Es wird die Anzahl der Far Cluster (FC) festgelegt und ihre Positionen innerhalb der Funkzellenfläche mit einer Zufallsfunktion gleichverteilt.
Es ist zu beachten, dass zur Minimierung des Rechenaufwandes die Radien der FC nur im Setup gesetzt und später nicht aktualisiert werden. Somit bleibt ihr Durchmesser während der ganzen Simulation konstant und hängt rein von der Startposition der MS und den dazugehörigen Spreads (CAS, CDS) ab. Auch wird die Anzahl der FC nicht, wie oben beschrieben, mit einer Zufallszahl aus einer Poisson-Verteilung bestimmt, sondern für die Festlegung der Anzahl der FC wird nur ein einzelner möglicher Wert aus der Verteilung verwendet, und somit bleibt die Anzahl der FC während einer ganzen Kanalsimulation konstant.

## Initialisierung der Shadowing- und Spread-Tabellen

In diesem Schritt werden Tabellen mit den korrelierenden Werten von Shadowing, CAS und CDS angelegt, deren Erstellung auf Basis des weiter oben beschriebenen Verfahrens erfolgt. Der Abstand zwischen zwei Tabelleneinträgen entspricht einer Weiterbewegung der MS um einen Meter, egal in welche Richtung. Entscheidend ist hier nur der zurückgelegte Weg seit Start der Simulation. Da die drei Parameter für jeden Cluster unterschiedlich sind, werden die Tabellen für jeden Cluster extra erstellt. Ein Beispiel für die 3 Tabellen eines Clusters, als Diagramm dargestellt, ist aus Fig. 24 zu ersehen.

## Interpolation des Shadowing-Wertes

Die Shadowing-Werte der einzelnen Cluster werden unabhängig von der tatsächlichen MS-Position, sondern abhängig von ihrem zurückgelegten Weg linear aus den Tabellen interpoliert, damit können Zwischenwerte aus dem 1-Meter-Raster besser angenähert werden. Da aus Speicherplatzgründen die Länge dieser Tabellen normalerweise nur für eine Distanz von 128 Metern angelegt wird, muss bei Überschreitung dieser Marke durch die MS wieder beim ersten Tabelleneintrag begonnen werden.

## Interpolation von Cluster Azimut Spread und Cluster Delay Spread

Nach dem gleichen Verfahren wie beim Shadowing-Wert werden auch CAS und CDS aus der zugehörigen Tabelle linear interpoliert.

## Interpolation der Korrekturwerte

Die Korrekturwerte $L_{MC}$ zur Berechnung der Pfadgewichte von LOS, NS und FS wurden in der Monte-Carlo-Simulation in 128 gleich großen Schritten zwischen Zellmitte und Zellrand festgelegt und werden nun abhängig vom BS-MS-Abstand durch lineare Interpolation diesen Tabellen entnommen.

Erzeugen der Visibility Regions

Die Cluster-VRs und die LOS-VRs werden in der Funkzelle ausgestreut. Dabei wird nicht darauf geachtet, ob die VRs an gewissen Stellen überlappen. An einem Überlappungsort ist die Sichtbarkeit *V* gleich dem größeren der beiden Werte. Es wird ebenfalls nicht berücksichtigt, ob eine Cluster-VR im Bereich des zugehörigen FC positioniert ist, d.h. die MS könnte im Modell zwar in diesem Cluster stehen und ihn trotzdem nicht sehen. Die Form der VRs wird im analysierten Modell jedoch wegen Einsparung des Rechenaufwands unterschiedlich zum COST-Vorschlag quadratisch generiert. Die Radien $r_{c,LOS}$ und $r_{c,SF}$ aus den externen Parametern entsprechen dabei jeweils der halbierten Seitenlänge einer VR und die Anzahl wird um den Faktor $\pi/4$ verändert mit

$$N_{VR,Cl,i} = \left(\frac{d_{co}}{r_{c,SF}}\right)^2 \cdot \frac{m}{N_{Cl}} \cdot \frac{\pi}{4} \qquad (36)$$

$$N_{VR,LOS} = \frac{h_{BS} - h_{roof}}{h_{BS}} \cdot 0{,}5 \cdot \left(\frac{d_{co}}{r_{c,LOS}}\right)^2 \cdot \frac{\pi}{4} \qquad (37)$$

bestimmt. Die Ergebnisse müssen wieder auf den nächstliegenden ganzzahligen Wert gerundet werden.

Ausstreuen der Scatterer

Mit Hilfe von CAS und CDS wird die Größe der Cluster festgelegt und die Near- und Far Scatterer können in den Clustern ausgestreut werden (siehe Kapitel 0). Ihre Anzahl pro Cluster muss jedoch zur Minimierung des Rechenaufwandes während einer ganzen Simulation konstant gehalten werden. Es werden jedoch in jedem Cluster mehr als doppelt so viele Scatterer erzeugt, als benötigt werden. Weil viele MPCs durch eine negative Signalverzögerung $\Delta_T < 0$ aus der Berechnung wegfallen, wird für die verbleibenden ein Teil der Pfadgewichte berechnet und davon wird nur jene Anzahl der stärksten Pfade verwendet, die für die Simulation benötigt wird.

Berechnung von Pfadgewichtskomponenten

Durch das Wissen um alle Abstände und Winkel in der Zelle können die Berechnung der ADPS-Scatterer-Dämpfung und die Jacobian-Transformation durchgeführt werden, die einen Teil der einzelnen Pfadgewichte von LOS, NS und FS bestimmen. Aufgrund der äußerst aufwändigen Berechnung dieser beiden Faktoren wurde im GSCM das Produkt der beiden aus den Formeln (33) und (34) stark vereinfacht. Für die Berechnung wird zwischen NC (im Uplink) und FC unterschieden.

$$G_{NS,Uplink}(t,\tau,\varphi) = P_s(\Delta\tau,\Delta\varphi) \cdot J(x_s,y_s) \approx \frac{1}{\sqrt{2\pi} \cdot S_{\varphi,NC} \cdot d_{MS}} \cdot e^{-\frac{1}{2}\left(\frac{d_{MS,NS}}{S_{\varphi,NC} \cdot d_{MS}}\right)^2} \qquad (38)$$

$$G_{FS}(t,\tau,\varphi) = P_s(\Delta\tau,\Delta\varphi) \cdot J(x_s,y_s) \approx \frac{100}{\sqrt{2\pi} \cdot S_{\varphi,FC} \cdot d_{FC}} \cdot e^{-\frac{1}{2}\left(\frac{(d_{FS}+d_{MS,FS})-(d_{FC}+d_{MS,FC})}{S_{\varphi,FC} \cdot d_{FC}}\right)^2} \qquad (39)$$

Auch hier werden nur diejenigen FS verwendet, bei denen die Signallaufzeit länger ist als die Laufzeit über das zugehörige FC-Zentrum. Es muss deshalb mehr als die doppelte benötigte Anzahl von Scatterern in einem Cluster ausgestreut werden.
Es existiert weiters eine andere, noch stärker vereinfachte Option der Pfadgewichtsbestimmung, bei der alle NS auch im Uplink gleich gewichtet werden und somit $a_{NS,Uplink}$ gleich wie $a_{NS,Downlink}$ berechnet wird.

Bestimmung des richtungsabhängigen Antennengewinns

Der Antennengewinn wird für die LOS und jeden einzelnen NS abhängig von der Ausrichtung der Antenne aus dem vorgegebenen Antennenmuster interpoliert. Für alle FS eines FC wird zur Minimierung des Rechenaufwands der Antennenfaktor nur über den Winkel zum Clusterzentrum bestimmt und somit identisch angenommen. Um bei Analysen die Bewertung der Ergebnisse zu erleichtern wird jedoch der Einfluss durch Antennen üblicherweise ausgeschaltet, indem man den Antennengewinn in jede Richtung auf 1 setzt.

Neupositionierung von NC und NS

Bei der Bewegung des NC mit der MS verändert sich durch CAS und CDS die Größe des Clusters, und Scatterer fallen hinaus. Ihre Anzahl pro Cluster muss jedoch zur Verringerung des Rechenaufwands konstant gehalten werden. Sobald also ein Scatterer nicht mehr im Bereich seines Clusters liegt, muss er durch einen neuen ersetzt werden. Nur auf diese Art kann ein neuer Scatterer hinzukommen. Es muss allerdings darauf geachtet werden, dass eine Gleichverteilung der Scatterer bestehen bleibt. Dazu müssen zwei Fälle unterschieden werden.
Wird der neue Clusterradius kleiner als der aus dem vorhergehenden LS-Update, so werden die neuen Scatterer im ganzen Cluster mit einer Gleichverteilung ausgestreut. Falls der neue Clusterradius größer als der alte wird, so werden die neuen Scatterer in den Bereich des neuen Clusters, der sich mit dem alten Cluster nicht überschneidet, gesetzt. Ein Scatterer, der aus dem NC fällt, wird aus dem Speicher gelöscht und taucht somit nicht wieder auf, wenn sich die MS wieder in diesen Bereich bewegt. Außerdem kann es geschehen, dass ein FC von der MS durchschritten wird. Dabei werden dessen Far Scatterer nicht zu Scatterern des NC. NC und FC werden also auch in diesem Fall völlig unabhängig voneinander betrachtet.

**Patentansprüche**

1. Kanalsimulator zur Simulation zumindest eines Übertragungskanals zwischen Sendesignale ausstrahlenden Sendern und Empfängern eines digitalen oder analogen Funkübertragungssystems, umfassend:

   Kanalsimulator-Eingangsmittel zum Empfang von Sendesignalen repräsentierenden Eingangssignalen, wobei die Eingangssignale eines oder mehrere aus digitalen oder analogen Hochfrequenzsignalen, digitalen oder analogen Basisband- oder Zwischenfrequenzbandsignalen, Audio- und/oder Videosignalen umfassen, Steuerungsmittel zur Bereitstellung zumindest eines durch Kanalparameter definierten Kanalmodells zur Beschreibung von Signalformungseigenschaften des zumindest einen Übertragungskanals, Signalverarbeitungsmittel zur Erzeugung zumindest eines Ausgangssignals durch Formung des Eingangssignals gemäß den Signalformungseigenschaften des Kanalmodells, Ausgabemittel zur Ausgabe des zumindest einen Ausgangssignals,

   **dadurch gekennzeichnet, dass** die Signalverarbeitungsmittel (FPGA, DSP) zur mathematischen Abbildung des Kanalmodells als geometrisches Modell mit einer Vielzahl von Streuobjekten und zur Formung des Ausgangssignals durch Echtzeit-Berechnung des Ausbreitungsverlaufs von Mehrwegkomponenten des Eingangssignals ausgebildet sind, welche Mehrwegkomponenten durch Streuung, Reflexion und Beugung des Eingangssignals an den Streuobjekten des geometrischen Modells hervorgerufen werden.

2. Kanalsimulator nach Anspruch 1, **dadurch gekennzeichnet, dass** die Signalverarbeitungsmittel (FPGA, DSP) zur Verarbeitung von sich im Verlauf der Simulationsberechnungen ändernden Kanalparametern des Kanalmodells ausgebildet sind und/oder dass die Signalverarbeitungsmittel (FPGA, DSP) zur Analyse einzelner Datensegmente während der Simulationsberechnungen, z.B. zur Ermittlung der Kanal-Impulsantwort, ausgebildet sind.

3. Kanalsimulator nach einem der vorhergehenden Ansprüche, **dadurch gekennzeichnet, dass** das geometrische Modell auf der nachfolgenden Formel basiert:

$$Y=H*X$$

$$H = H_{LOS} + \sum_{k=0}^{N_{NS}} H_{NS}(k) + \sum_{n,m}^{N_{FC},N_{FS}} H_{FS}(n,m)$$

| | |
|---|---|
| Y... | komplexes Ausgangssignal des Kanalsimulators |
| H... | komplexe Impulsantwort des Kanalsimulators |
| X... | komplexes Eingangssignal des Kanalsimulators |
| $H_{LOS}$... | komplexe Impulsantwort der Line-of-Sight (LOS)-Komponente |
| $H_{NS}(k)$... | komplexe Impulsantwort des k-ten Scatterers (Streuobjekt) im "near scatter cluster" |
| $N_{NS}$... | Anzahl der Scatterer in der "near scatter area" |
| $H_{FS}(n, m)$... | komplexe Impulsantwort des m-ten Scatterers im n-ten "far scatter cluster" |
| $N_{FC}$ ... | Anzahl der "far scatter cluster" |
| $N_{FS}$... | Anzahl der Scatterer in einer "far scatter area" |

**4.** Kanalsimulator nach einem der vorhergehenden Ansprüche, **dadurch gekennzeichnet, dass** das von den Signalverarbeitungsmitteln (FPGA, DSP) abgebildete geometrische Modell ein geometriebasiertes stochastisches Kanalmodell (GSCM) ist, und/oder dass das GSCM zur Unterscheidung zwischen Uplink und Downlink der Funkübertragung, das ist die Umkehr von Sende- und Empfangsrichtung zwischen Sendern/Empfängern, ausgebildet ist, und/oder dass das GSCM eine statistisch zufällige Anordnung der Streuobjekte in Form von Gruppen (Cluster) vorsieht, wobei vorzugsweise zwischen nahe dem Empfänger befindlichen "Near Clustern" und entfernt vom Empfänger befindlichen "Far Clustern" unterschieden wird, wobei gegebenenfalls die Anzahl der Cluster durch einen stochastischen Poisson-Point-Prozess ermittelt wird, und/oder dass die Cluster innerhalb eines Übertragungskanals gleichverteilt sind, und/oder dass die Streuobjekte (Scatterer) innerhalb eines Clusters gleichverteilt sind.

**5.** Kanalsimulator nach Anspruch 4, **dadurch gekennzeichnet, dass** das GSCM Korrekturfaktoren vorsieht, mit welchen Korrekturfaktoren eine Anpassung der Simulationsberechnungen an empirisch ermittelte Ergebnisse, insbesondere nach COST das GSCM Phasen-Korrekturfaktoren umfasst, um die Phase eines Trägersignals im Rahmen einer Basisband-Simulation zu berücksichtigen, und/oder dass das GSCM zur Berücksichtigung des Einflusses von Abschattung statistisch zufällig verteilte Abschattungsobjekte (Visibility Regions) enthält, wobei gegebenenfalls die Visibility Regions im Abstand zum Sender und im Azimut gleichverteilt sind.

**6.** Kanalsimulator nach einem der Ansprüche 1 bis 5, **dadurch gekennzeichnet, dass** die Signalverarbeitungsmittel (FPGA, DSP) zur Multiplikation der Mehrwegkomponenten mit physikalische Effekte des Übertragungskanals subsummierenden, gemäß den Kanalparametern des Kanalmodells bestimmbaren Gewichtsfaktoren und zur Überlagerung der gewichteten Mehrwegkomponenten ausgebildet sind.

**7.** Kanalsimulator nach einem der vorhergehenden Ansprüche, **dadurch gekennzeichnet, dass** er zur Kopplung mehrerer Kanalsimulatoren über Synchronisationseingänge (SYNC in) und -ausgänge (SYNC out) verfügt, und/oder dass das Steuerungsmittel eine graphische Benutzeroberfläche (GUI) umfasst, welche vorzugsweise eine 3D-Darstellung von Impulsantworten unterstützt, und/oder dass die Signalverarbeitungsmittel zumindest einen Signalprozessor (DSP) umfassen, und/oder dass der zumindest eine Signalprozessor zur Durchführung geometrischer und statistischer Berechnungen ausgebildet ist, und/oder dass die Signalverarbeitungsmittel Field Programmable Gate Arrays (FPGA) umfassen, wobei gegebenenfalls die Field Programmable Gate Arrays (FPGA) zur Durchführung der Multiplikationen der Mehrwegkomponenten mit den Gewichtsfaktoren sowie der Überlagerung der gewichteten Mehrwegkomponenten ausgebildet sind.

**8.** Kanalsimulator nach einem der vorangegangenen Ansprüche, **dadurch gekennzeichnet, dass** zumindest ein Bewegungsmodell zur Beschreibung eines bewegten Empfängers/Senders (Mobilstation) implementiert ist, wobei gegebenenfalls das Bewegungsmodell die Bewegung der Mobilstation durch zwei konzentrische Kreise mit unterschiedlichen Radien beschreibt, innerhalb deren sich die Mobilstation geradlinig und mit konstanter Geschwindigkeit bewegt, und an denen die Mobilstation bei Berührung reflektiert wird oder das Bewegungsmodell die Bewegung der Mobilstation durch eine Punkttabelle beschreibt, welche einzelne Punkte der Bewegung definiert, wobei die Zeitintervalle zwischen den einzelnen Punkten konstant oder variabel sein können.

**9.** Verfahren zur Simulation zumindest eines Übertragungskanals zwischen Sendesignale ausstrahlenden Sendern und Empfängern eines digitalen oder analogen Funkübertragungssystems, insbesondere für einen Kanalsimulator nach einem der vorangegangenen Ansprüche umfassend:

das Empfangen von Sendesignalen repräsentierenden Eingangssignalen, wobei die Eingangssignale eines oder mehrere aus digitalen oder analogen Hochfrequenzsignalen, digitalen oder analogen Basisband- oder Zwischenfrequenzbandsignalen, Audio- und/oder Videosignalen umfassen,
das Bereitstellen zumindest eines durch Kanalparameter definierten Kanalmodells zur Beschreibung von Signalformungseigenschaften des zumindest einen Übertragungskanals,
das Erzeugeng zumindest eines Ausgangssignals durch Formen des Eingangssignals gemäß den Signalformungseigenschaften des Kanalmodells,
das Ausgeben des zumindest einen Ausgangssignals,

**dadurch gekennzeichnet, dass** das Kanalmodell mathematisch als geometrisches Modell mit einer Vielzahl von Streuobjekten abgebildet wird und das Ausgangssignal durch Echtzeit-Berechnung des Ausbreitungsverlaufs von Mehrwegkomponenten des Eingangssignals geformt wird, welche Mehrwegkomponenten durch Streuung, Reflexion und Beugung des Eingangssignals an den Streuobjekten des geometrischen Modells hervorgerufen werden.

10. Kanalsimulationsverfahren nach Anspruch 9, **dadurch gekennzeichnet, dass** sich im Verlauf der Simulationsberechnungen ändernde Kanalparameter des Kanalmodells während der Simulationsberechnungen übernommen werden, und/oder dass einzelne Datensegmente während der Simulationsberechnungen analysiert werden, z.B. zur Ermittlung der Kanal-Impulsantwort, und/oder dass das geometrische Modell gemäß nachfolgender Formel errechnet wird:

$$Y = H \cdot X$$

$$H = H_{LOS} + \sum_{k=0}^{N_{NS}} H_{NS}(k) + \sum_{n,m}^{N_{FC}, N_{FS}} H_{FS}(n,m)$$

| | |
|---|---|
| $Y$... | komplexes Ausgangssignal des Kanalsimulators |
| $H$... | komplexe Impulsantwort des Kanalsimulators |
| $X$... | komplexes Eingangssignal des Kanalsimulators |
| $H_{LOS}$... | komplexe Impulsantwort der Line-of-Sight (LOS)-Komponente |
| $H_{NS}(k)$... | komplexe Impulsantwort des k-ten Scatterers (Streuobjekt) im "near scatter cluster" |
| $N_{NS}$... | Anzahl der Scatterer in der "near scatter area" |
| $H_{FS}(n, m)$... | komplexe Impulsantwort des m-ten Scatterers im n-ten "far scatter cluster" |
| $N_{FC}$ ... | Anzahl der "far scatter cluster" |
| $N_{FS}$ ... | Anzahl der Scatterer in einer "far scatter area" |

11. Kanalsimulationsverfahren nach Anspruch 9 oder 10, **dadurch gekennzeichnet, dass** das abgebildete geometrische Modell ein geometriebasiertes stochastisches Kanalmodell (GSCM) ist, wobei gegebenenfalls das GSCM zwischen Uplink und Downlink der Funkübertragung unterscheidet oder das GSCM eine statistisch zufällige Anordnung der Streuobjekte in Form von Gruppen (Cluster) vorsieht, wobei vorzugsweise zwischen nahe dem Empfänger befindlichen "Near Clustern" und entfernt vom Empfänger befindlichen "Far Clustern" unterschieden wird, wobei gegebenenfalls die Anzahl der Cluster durch einen stochastischen Poisson-Point-Prozess ermittelt wird, und/oder dass die Cluster innerhalb eines Übertragungskanals gleichverteilt werden, und/oder die Streuobjekte (Scatterer) innerhalb eines Clusters gleichverteilt werden.

12. Kanalsimulationsverfahren nach Anspruch 11, **dadurch gekennzeichnet, dass** das GSCM Korrekturfaktoren vorsieht, mit welchen Korrekturfaktoren eine Anpassung der Simulationsberechnungen an empirisch ermittelte Ergebnisse, insbesondere nach COST Hata bzw. COST Walfish-Ikegami Standard, erfolgt, wobei gegebenenfalls die Korrekturfaktoren mithilfe einer Monte-Carlo-Simulation berechenbar sind.

13. Kanalsimulationsverfahren nach Anspruch 11 oder 12, **dadurch gekennzeichnet, dass** das GSCM Phasen-Korrekturfaktoren umfasst, um die Phase eines Trägersignals im Rahmen einer Basisband-Simulation zu berücksichtigen, und/oder dass das GSCM zur Berücksichtigung des Einflusses von Abschattung statistisch zufällig verteilte Abschattungsobjekte (Visibility Regions) enthält, wobei gegebenenfalls die Visibility Regions im Abstand zum Sender und im Azimut gleichverteilt werden.

14. Kanalsimulationsverfahren nach einem der Ansprüche 9 bis 13, **dadurch gekennzeichnet, dass** die Mehrwegkomponenten mit physikalische Effekte des Übertragungskanals subsummierenden, gemäß den Kanalparametern des Kanalmodells bestimmten Gewichtsfaktoren multipliziert und die gewichteten Mehrwegkomponenten einander überlagert werden, und/oder dass mittels einer graphischen Benutzeroberfläche 3D-Darstellungen von Impulsantworten vorgenommen werden, und/oder dass zumindest ein Bewegungsmodell zur Beschreibung eines bewegten Empfängers/Senders (Mobilstation) implementiert ist, wobei gegebenenfalls das Bewegungsmodell die Bewegung der Mobilstation durch zwei konzentrische Kreise mit unterschiedlichen Radien beschreibt, innerhalb deren sich die Mobilstation geradlinig und mit konstanter Geschwindigkeit bewegt, und an denen die Mobilstation bei Berührung reflektiert wird oder das Bewegungsmodell die Bewegung der Mobilstation durch eine Punkttabelle beschreibt, welche einzelne Punkte der Bewegung definiert, wobei die Zeitintervalle zwischen den einzelnen Punkten konstant oder variabel sein können.

Fig. 1

C: Control Bit
GP: Guard Period
TB: Tail Bit
TS: Training Sequence

Fig. 2

Fig. 3

Recheneinheit X

anal. NF/BB in → A/D

anal. HF in → HF → Mischer → A/D

dig. BB in → LVDS

anal. NF/BB out ← D/A

anal. HF out ← HF ← Mischer ← D/A

dig. BB out ← LVDS

FPGA

DSP

µC → zur Bedieneinheit

SYNC out
SYNC in

Fig. 4

## Fig. 5

Recheneinheit 1
IN/OUT
SYNC out
SYNC in

Recheneinheit 2
IN/OUT
SYNC out
SYNC in

Recheneinheit 3
IN/OUT
SYNC out
SYNC in

Recheneinheit N
IN/OUT
SYNC out
SYNC in

GUI

## Fig. 6

96. pol Steckerleiste; Power Supply 12V, 5V

dig. Out oder LVDS

Xilinx Virtex 2

2 MByte Flash

Expansion Stecker

16MByte SDRAM

32 Bit Memory Bus

EMIF B

Flash Memory 2*2MByte

SO DIMM SDRAM (256MByte oder 512MByte)

EMIF A

DSP TMS320C6416 (400, 500, 600 MHZ)

32 MByte SDRAM (2 Chips 32Bit*128Mbit)

Motorola Coldfire MCF5272

2 fach RS232 Transceiver

6 pol. Western Stecker

USB Transceiver

USB Stecker

Ethernet Trans- ceiver

RJ45 Stecker

# EP 1 487 139 A1

**Radio Environments:**

GTU General Typical Urban
GRA General Rural Area
GBU General Bad Urban
GHT General Hilly Terrain

GSN General Street NLOS
GSL General Street Canyon LOS
GSX General Street Crossing
GOP General Open Place

GOL General Office LOS
GON General Office NLOS
GCL General Corridor LOS
GCN General Corridor NLOS
GFH General Factory/Hall

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Zufallszahlen
Berechnen (=Sender)
$\tilde{x}$

x

LOS
Berechnung

Anzahl der NS

Anzahl der FC

NS-
Berechnung

Anzahl der FS

FS-
Berechnung

Ergebnisse Addieren
LOS + alle NS + alle FS

y

Fig. 22

Fig. 23

Fig. 24

**Europäisches Patentamt**

# EUROPÄISCHER RECHERCHENBERICHT

Nummer der Anmeldung

EP 04 45 0125

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 878 921 A (MITSUBISHI ELECTRIC CORP) 18. November 1998 (1998-11-18) | 1,2,9 | H04B17/00 |
| A | * Spalte 2, Zeile 19 - Spalte 3, Zeile 18 * | 3-8, 10-14 | |
| | * Spalte 4, Zeilen 31-39 * * Spalte 8, Zeile 30 - Spalte 13, Zeile 26 * | | |
| | * Abbildung 5 * | | |
| | ----- | | |
| X | WO 00/27149 A (NOKIA NETWORKS OY ; HEISKA KARI (FI); KAUPPINEN HANNU (FI); PEKONEN OL) 11. Mai 2000 (2000-05-11) | 1,2,9 | |
| A | * Seite 1, Zeilen 17-22 * | 3-8, 10-14 | |
| | * Seite 2, Zeile 29 - Seite 3, Zeile 17 * * Seite 4, Zeile 21 - Seite 6, Zeile 29; Abbildungen 2A,2B * | | |
| | ----- | | |
| X | HASSAN-ALI M ET AL: "A NEW STATISTICAL MODEL FOR SITE-SPECIFIC INDOOR RADIO PROPAGATION PREDICTION BASED ON GEOMETRIC OPTICS AND GEOMETRIC PROBABILITY" IEEE TRANSACTIONS ON WIRELESS COMMUNICATIONS, IEEE, PISCATAWAY, US, Bd. 1, Nr. 1, Januar 2002 (2002-01), Seiten 112-124, XP001143810 ISSN: 1536-1276 | 1,2,9 | RECHERCHIERTE SACHGEBIETE (Int.Cl.7) H04B H04Q |
| A | * das ganze Dokument * | 3-8, 10-14 | |
| | ----- | | |
| X | US 5 491 644 A (BARNHART ERIC N ET AL) 13. Februar 1996 (1996-02-13) | 1,2,9 | |
| A | * Spalte 2, Zeile 66 - Spalte 3, Zeile 12; Abbildung 2 * | 3-8, 10-14 | |
| | * Spalte 5, Zeilen 6-20 * * Spalte 5, Zeile 66 - Spalte 7, Zeile 6 * | | |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| München | 30. September 2004 | Ernst, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**Europäisches Patentamt**

# EUROPÄISCHER RECHERCHENBERICHT

*Nummer der Anmeldung*

EP 04 45 0125

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | MOHASSEB Y ET AL: "A 3D spatio-temporal simulation model for wireless channels" ICC 2001. 2001 IEEE INTERNATIONAL CONFERENCE ON COMMUNICATIONS. CONFERENCE RECORD. HELSINKY, FINLAND, JUNE 11 - 14, 2001, IEEE INTERNATIONAL CONFERENCE ON COMMUNICATIONS, NEW YORK, NY : IEEE, US, Bd. VOL. 1 OF 10, 11. Juni 2001 (2001-06-11), Seiten 1711-1717, XP010553162 ISBN: 0-7803-7097-1 | 1,2,9 | |
| A | * Seite 1711, linke Spalte, letzter Absatz - Seite 1713, linke Spalte, Absatz 1 * ----- | 3-8, 10-14 | |
| | | | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| München | 30. September 2004 | Ernst, C |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
    ....................................................................................
& : Mitglied der gleichen Patentfamilie, übereinstimmendes
    Dokument

EPO FORM 1503 03.82 (P04C03)

EP 1 487 139 A1

## ANHANG ZUM EUROPÄISCHEN RECHERCHENBERICHT
## ÜBER DIE EUROPÄISCHE PATENTANMELDUNG NR.

EP 04 45 0125

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-09-2004

| Im Recherchenbericht angeführtes Patentdokument | | Datum der Veröffentlichung | Mitglied(er) der Patentfamilie | | Datum der Veröffentlichung |
|---|---|---|---|---|---|
| EP 0878921 | A | 18-11-1998 | WO | 9823043 A1 | 28-05-1998 |
| | | | AU | 706075 B2 | 10-06-1999 |
| | | | AU | 7638896 A | 10-06-1998 |
| | | | EP | 0878921 A1 | 18-11-1998 |
| | | | JP | 3135586 B2 | 19-02-2001 |
| | | | US | 6349119 B1 | 19-02-2002 |
| WO 0027149 | A | 11-05-2000 | FI | 982352 A | 30-04-2000 |
| | | | AU | 1050200 A | 22-05-2000 |
| | | | CN | 1135882 B | 21-01-2004 |
| | | | EP | 1040694 A1 | 04-10-2000 |
| | | | WO | 0027149 A1 | 11-05-2000 |
| | | | JP | 2002529985 T | 10-09-2002 |
| | | | NO | 20003373 A | 28-06-2000 |
| | | | US | 6785547 B1 | 31-08-2004 |
| US 5491644 | A | 13-02-1996 | KEINE | | |

EPO FORM P0461

Für nähere Einzelheiten zu diesem Anhang : siehe Amtsblatt des Europäischen Patentamts, Nr.12/82